# EUROPEAN PATENT SPECIFICATION

(11) **EP 3 373 179 B1**
(45) Date of publication and mention of the grant of the patent: **07.08.2019**
(21) Application number: 15910665.7
(22) Date of filing: 14.12.2015
(51) Int. Cl.: G06F 21/55, H04L 29/06, H04L 12/24, G06F 21/57

(54) **INFORMATION PROCESSING DEVICE, INFORMATION PROCESSING METHOD, AND INFORMATION PROCESSING PROGRAM**
INFORMATIONSVERARBEITUNGSVORRICHTUNG, INFORMATIONSVERARBEITUNGSVERFAHREN UND INFORMATIONSVERARBEITUNGSPROGRAMM
DISPOSITIF, PROCÉDÉ ET PROGRAMME DE TRAITEMENT D'INFORMATIONS

(43) Date of publication of application: 12.09.2018
(73) Proprietor: Mitsubishi Electric Corporation, Chiyoda-ku Tokyo 100-8310 (JP)
(72) Inventor: IJIRO, Hideaki, Tokyo 100-8310 (JP); KAWAUCHI, Kiyoto, Tokyo 100-8310 (JP)
(74) Representative: Mewburn Ellis LLP
(86) International application number: PCT/JP2015/084931
(87) International publication number: WO 2017/103974

(56) References cited:
- WO-A1-2015/059791
- WO-A1-2015/059791
- US-B2- 8 863 293
- Jeannette M. Wing: "Scenario Graphs Applied to Network Security" In: "Information Assurance", 1 January 2008 (2008-01-01), Elsevier, XP055489436, ISBN: 978-0-12-373566-9 pages 247-277, DOI: 10.1016/B978-012373566-9.50011-2, * Sections 1, 3-6 *

## Description

### Technical Field

The present invention relates to a technique for detecting an attack on an information system.

### Background Art

As an attack on an information system, there is a targeted attack, for example. In the targeted attack, since an attacker acts by pretending to be an authorized user, it is difficult to differentiate between an authorized activity and an attack activity. To differentiate between an authorized activity and an attack activity properly, it is necessary to tune detection rules for attack detection.

However, with conventional integrated log monitoring, it is difficult to tune detection rules in such a way that a balance between failure to detect an attack and false detection is achieved.

On the other hand, a technique of defining a change in events which are observed in activities of an attacker as a scenario and assuming that an attack has occurred if the occurrence of events in accordance with the scenario is observed is proposed (for example, Patent Literature 1).

Specifically, in the technique of Patent Literature 1, attack activity definition information is defined for each of a plurality of events which presumably occur in a targeted attack. In the attack activity definition information, the details of an event, a precondition for the occurrence of the event, an achievement state indicating new knowledge and state which are expected to be obtained by the attacker by the occurrence of the event, and so forth are defined. Detection of the targeted attack is performed as follows: targeted attack detection software (S/W) receives an event which is sent from a security apparatus such as security information and event management (SIEM) and, if the targeted attack detection S/W determines that the probability of the targeted attack is high, the targeted attack detection S/W alerts an administrator.

If the probability is not that high to the extent that the targeted attack detection S/W alerts the administrator, the targeted attack detection S/W predicts an event which will occur next by making use of the attack activity definition information corresponding to the received event. Moreover, the targeted attack detection S/W changes monitoring settings of the SIEM or an apparatus on a network to be monitored so that the targeted attack detection S/W can perform closer monitoring by using the predicted event when necessary.

Attack activities of the attacker on the information system are managed by adding, to the attack activity definition information, bound variable information such as an Internet Protocol (IP) address and a terminal identification number of a terminal device in which an attack has occurred. By doing so, it is possible to manage a series of attack activities which has occurred as a result of entrance into a system component element (for example, a computer terminal A) of the information system and a series of attack activities which has occurred as a result of entrance into another system component element (for example, a computer terminal B) as different scenarios.

Moreover, also when an event which will occur next is predicted, by performing conditioned monitoring along with the bound variable information, a normal activity of the user is prevented from being falsely detected as an attack activity.

### Citation List

### Patent Literature

Patent Literature 1: WO 2015/059791

### Summary of Invention

### Technical Problem

However, with the technique of Patent Literature 1, if an attacker enters a plurality of system component elements and conducts attack activities from the plurality of system component elements, detection failure may occur.

For example, assume that the attacker illegally enters two computer terminals. At this time, if acquisition by the attacker of a log-in password of a file server from one computer terminal A can be detected, with the technique of Patent Literature 1, it is possible to predict, by using the attack activity definition information and the bound variable information, that the attacker will then log in to the file server from the computer terminal A and monitor log-in to the file server from the computer terminal A.

However, at this time, the attacker who has also entered the other computer terminal B can also illegally log in to the file server from the computer terminal B by using the password which the attacker illegally acquired in the computer terminal A.

With the technique of Patent Literature 1, since only log-in from the computer terminal A is predicted and monitored, failure to detect an attack on the file server from the computer terminal B can occur.

As described above, with the technique of Patent Literature 1, since only a system component element involved in the occurrence of a detected attack event is set as an object to be monitored, it is impossible to detect an attack which is made via another system component element.

A main object of the present invention is to solve such a problem. The present invention mainly aims to make it possible to detect an attack that is made via a system component element other than a system component element involved in the occurrence of a detected attack event.

### Solution to Problem

An information processing device according to the present invention includes:
a monitor event designating unit to designate, if an attack event which attacks an information system in which a plurality of system component elements are included is detected and a notification of a detected event which is the detected attack event and an event involvement element which is a system component element involved in an occurrence of the detected event is provided, an attack event which can occur next to the detected event due to involvement of the event involvement element as a monitor event; and
an involvement candidate element designating unit to designate, as an involvement candidate element, a system component element which can be involved in an occurrence of the monitor event other than the event involvement element, among the plurality of system component elements.

### Advantageous Effects of Invention

According to the present invention, since a system component element which can be involved in the occurrence of a monitor event other than an event involvement element which is a system component element involved in the occurrence of a detected attack event, is designated as an involvement candidate element, it is possible to detect an attack which is made via a system component element other than the event involvement element by monitoring the involvement candidate element.

### Brief Description of Drawings

Fig. 1 is a diagram depicting a system configuration example according to Embodiment 1.
Fig. 2 is a diagram depicting a functional configuration example of an information processing device according to Embodiment 1.
Fig. 3 is a diagram depicting internal configuration examples of a scenario managing unit and a scenario controlling unit according to Embodiment 1.
Fig. 4 is a diagram depicting a hardware configuration example of the information processing device according to Embodiment 1.
Fig. 5 is a flowchart diagram depicting an information processing method according to Embodiment 1.
Fig. 6 is a diagram depicting an example of event attribute information after reception of a detection alert according to Embodiment 1.
Fig. 7 is a diagram depicting an example of a scenario according to Embodiment 1.
Fig. 8 is a diagram depicting an example of monitor event information according to Embodiment 1.
Fig. 9 is a diagram depicting an example of monitor event information according to Embodiment 1 in which a cooperative prediction condition is described.
Fig. 10 is a flowchart diagram depicting a general outline of an operation of the information processing device according to Embodiment 1.
Fig. 11 is a flowchart diagram depicting the general outline of an operation of the information processing device according to Embodiment 1.
Fig. 12 is a flowchart diagram depicting an operation example of the scenario managing unit and the scenario controlling unit according to Embodiment 1.
Fig. 13 is a flowchart diagram depicting the operation example of the scenario managing unit and the scenario controlling unit according to Embodiment 1.
Fig. 14 is a flowchart diagram depicting the operation example of the scenario managing unit and the scenario controlling unit according to Embodiment 1.
Fig. 15 is a flowchart diagram depicting the operation example of the scenario managing unit and the scenario controlling unit according to Embodiment 1.
Fig. 16 is a flowchart diagram depicting an operation example of a scenario retrieving unit according to Embodiment 1.
Fig. 17 is a flowchart diagram depicting the operation example of the scenario retrieving unit according to Embodiment 1.
Fig. 18 is a flowchart diagram depicting an operation example of the scenario retrieving unit according to Embodiment 1.
Fig. 19 is a diagram depicting internal configuration examples of a scenario managing unit and a scenario controlling unit according to Embodiment 2.
Fig. 20 is a flowchart diagram depicting an operation example of the scenario managing unit and the scenario controlling unit according to Embodiment 2.
Fig. 21 is a flowchart diagram depicting an operation example of the scenario managing unit and the scenario controlling unit according to Embodiment 2.
Fig. 22 is a diagram depicting an example of monitor event information according to Embodiment 2 in which a cooperative prediction ID is described.
Fig. 23 is a flowchart diagram depicting an operation example of the scenario controlling unit according to Embodiment 2.
Fig. 24 is a diagram depicting an example of combined event attribute information according to Embodiment 2.
Fig. 25 is a diagram depicting internal configuration examples of a scenario managing unit and a scenario controlling unit according to Embodiment 3.
Fig. 26 is a diagram depicting an example of event attribute information according to Embodiment 3 in which a scenario integration exception identifier is described.
Fig. 27 is a flowchart diagram depicting an operation example of the scenario managing unit and the scenario controlling unit according to Embodiment 3.
Fig. 28 is a flowchart diagram depicting an operation example of the scenario managing unit and the scenario controlling unit according to Embodiment 3.
Fig. 29 is a diagram depicting internal configuration examples of a scenario managing unit and a scenario controlling unit according to Embodiment 4.
Fig. 30 is a flowchart diagram depicting an operation example of the scenario managing unit and the scenario controlling unit according to Embodiment 4.
Fig. 31 is a flowchart diagram depicting the operation example of the scenario managing unit and the scenario controlling unit according to Embodiment 4.
Fig. 32 is a diagram depicting an example of event attribute information before reception of the detection alert according to Embodiment 1.

### Description of Embodiments

### Embodiment 1.

### *** Description of the configuration ***

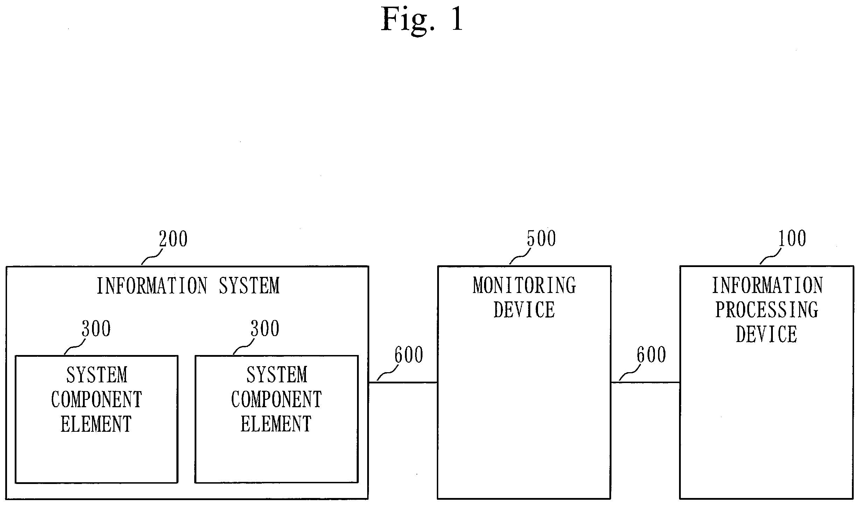

Fig. 1 depicts a system configuration example according to the present embodiment.

In the present embodiment, an information system 200, a monitoring device 500, and an information processing device 100 are connected via a network 600.

The information system 200 includes a plurality of system component elements 300.

The system component element 300 includes computer elements such as a terminal device and a server device.

Moreover, the system component element 300 includes human elements such as a user who uses the terminal device and a system administrator who manages the information system 200.

Furthermore, the system component element 300 includes data elements such as a file, a table, a function, a variable, and a constant.

In addition, an event occurs in the information system 200, and an attack on the information system 200 or an event showing a sign of the attack (hereinafter referred to as an attack event) is detected by the monitoring device 500.

In Fig. 1, the monitoring device 500 is disposed outside the information system 200, but the monitoring device 500 may be disposed in the information system 200.

The monitoring device 500 monitors the information system 200.

It is to be noted that "monitoring" by the monitoring device 500 means checking the presence or absence of the occurrence of an event on a regular or irregular basis by log search or the like in order to analyze the progress of an attack on the information system 200.

The monitoring device 500 is, for example, a security apparatus such as SIEM.

A notification of the attack event detected by the monitoring device 500 is provided to the information processing device 100 as a detection alert 400.

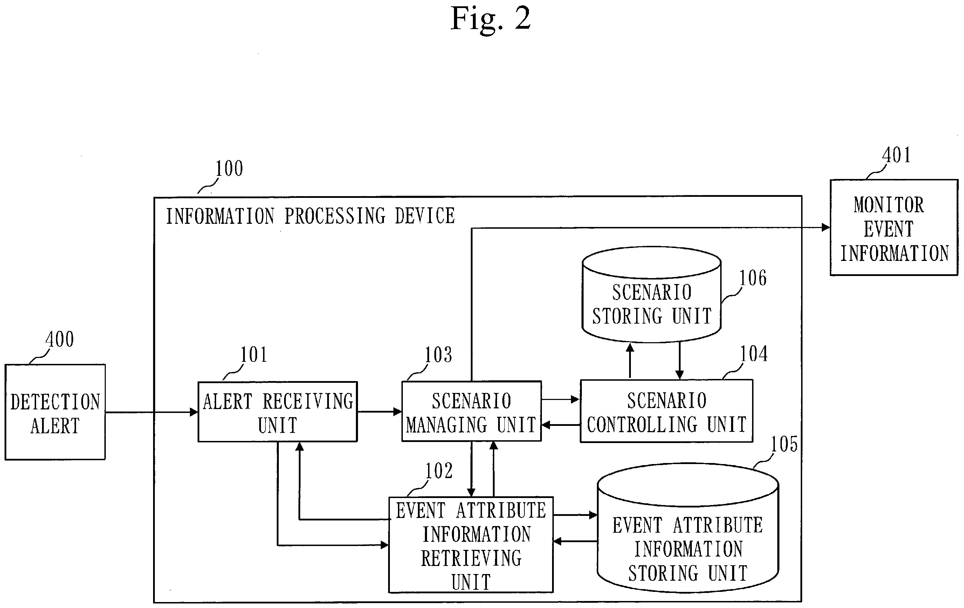

Fig. 2 depicts a functional configuration example of the information processing device 100.

The information processing device 100 includes an alert receiving unit 101, an event attribute information retrieving unit 102, a scenario managing unit 103, a scenario controlling unit 104, an event attribute information storing unit 105, and a scenario storing unit 106.

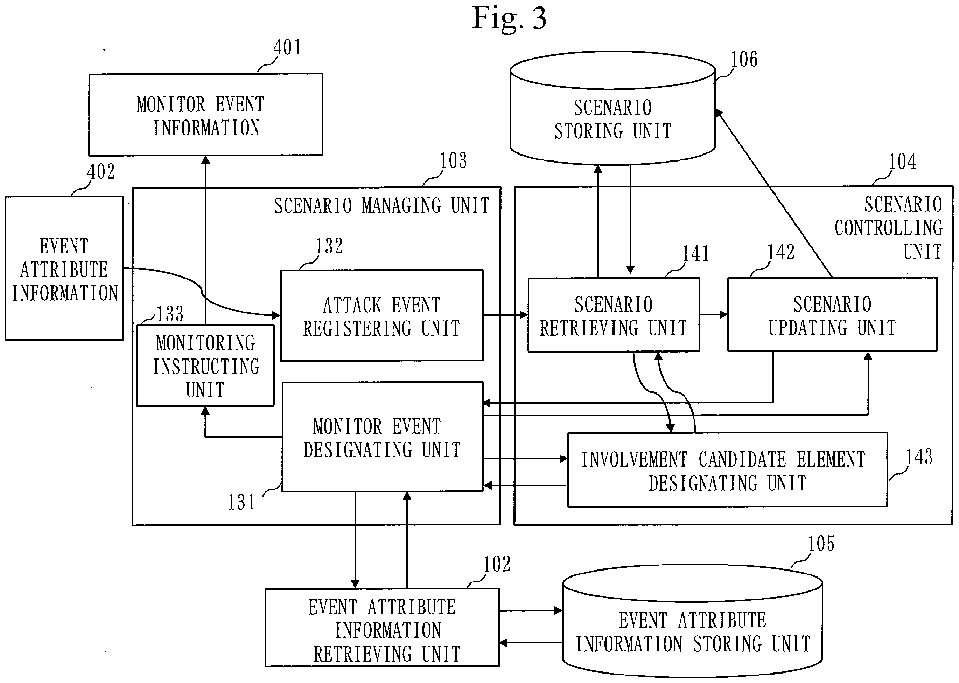

Moreover, as depicted in Fig. 3, the scenario managing unit 103 includes a monitor event designating unit 131, an attack event registering unit 132, and a monitoring instructing unit 133, and the scenario controlling unit 104 includes a scenario retrieving unit 141, a scenario updating unit 142, and an involvement candidate element designating unit 143.

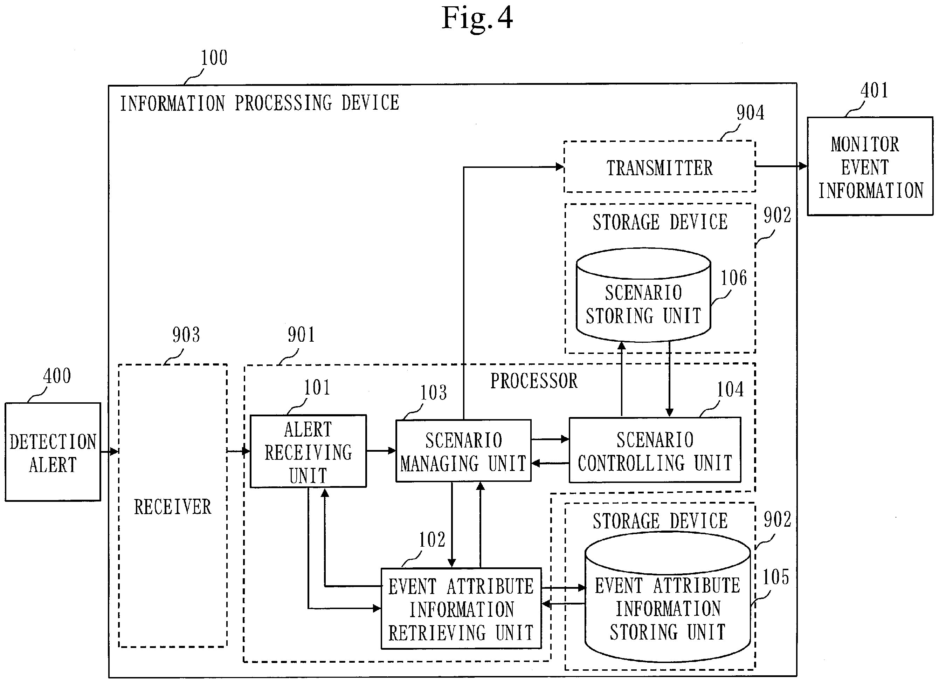

The information processing device 100 includes, as depicted in Fig. 4, hardware such as a processor 901, a storage device 902, a receiver 903, and a transmitter 904.

In the storage device 902, programs that realize the functions of the alert receiving unit 101, the event attribute information retrieving unit 102, the scenario managing unit 103, and the scenario controlling unit 104 are stored.

In addition, the processor 901 executes these programs and performs operations of the alert receiving unit 101, the event attribute information retrieving unit 102, the scenario managing unit 103, and the scenario controlling unit 104, which will be described later.

In Fig. 4, a state in which the processor 901 executes the programs that realize the functions of the alert receiving unit 101, the event attribute information retrieving unit 102, the scenario managing unit 103, and the scenario controlling unit 104 is schematically depicted.

Moreover, the event attribute information storing unit 105 and the scenario storing unit 106 are realized by the storage device 902.

The receiver 903 and the transmitter 904 communicate with the monitoring device 500.

### *** Description of an operation ***

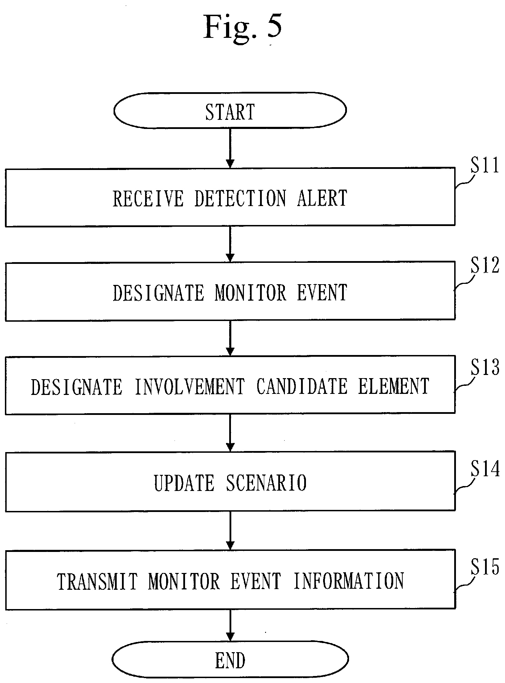

First, before details of an operation of the information processing device 100 according to the present embodiment are described, a general outline of an operation which is performed by the information processing device 100 will be described with reference to Fig. 5.

It is to be noted that the procedure depicted in Fig. 5 corresponds to an example of an information processing method and an information processing program.

If an attack event which attacks the information system 200 is detected by the monitoring device 500, in Step S11, the alert receiving unit 101 receives the detection alert 400 from the monitoring device 500 via the receiver 903.

The detection alert 400 provides a notification of the attack event detected by the monitoring device 500 (hereinafter referred to as a detected event) and a system component element 300 involved in an occurrence of the detected event (hereinafter referred to as an event involvement element).

It is to be noted that "being involved" means being a generator of the detected event, being an object of the detected event, being used as a parameter in the detected event, and so forth. Therefore, a "system component element 300 involved in the occurrence of the detected event" means a system component element 300 which is a generator of the detected event, a system component element 300 which is an object of the detected event, a system component element 300 which is used as a parameter in the detected event, and so forth.

Next, in Step S12, the monitor event designating unit 131 in the scenario managing unit 103 designates an attack event which can occur next to the detected event due to involvement of the event involvement element as a monitor event (monitor event designation processing).

More specifically, the monitor event designating unit 131 retrieves a scenario in the scenario storing unit 106 by using the scenario retrieving unit 141 based on the detected event and the event involvement element included in the notification provided by the detection alert 400 and designates a monitor event.

The scenario is stored in the scenario storing unit 106 for each system component element.

The scenario storing unit 106 stores event attribute information of the attack event detected by the monitoring device 500 as a scenario, by correlating the event attribute information with the system component element involved in the occurrence of the detected attack event.

The event attribute information is information indicating an attribute value of the attack event and is stored in the event attribute information storing unit 105.

As for a plurality of attack events, the event attribute information storing unit 105 stores the event attribute information for each attack event.

It is to be noted that details of the scenario and the event attribute information will be described later.

Next, in Step S13, the involvement candidate element designating unit 143 in the scenario controlling unit 104 designates, as an involvement candidate element, a system component element in which an attack event related to the monitor event has occurred (involvement candidate element designation processing).

The involvement candidate element is a system component element which can be involved in the occurrence of the monitor event other than the event involvement element, among the plurality of system component elements.

Next, in Step S14, a scenario updating unit 114 in the scenario controlling unit 104 updates the scenario.

More specifically, the scenario updating unit 114 adds the event attribute information of the monitor event (hereinafter referred to as the monitor event information) to a scenario of the event involvement element and a scenario of the involvement candidate element.

It is to be noted that the scenario updating unit 114 may add the monitor event information to the scenario of the event involvement element between Step S12 and Step S13.

Finally, the monitoring instructing unit 133 in the scenario managing unit 103 instructs the monitoring device 500 to monitor the monitor event in the event involvement element and the monitor event in the involvement candidate element.

Based on an instruction from the monitoring instructing unit 133, the monitoring device 500 determines whether or not the monitor event has occurred in the event involvement element and the involvement candidate element by searching the log on a regular or irregular basis.

Next, details of the operation of the information processing device 100 according to the present embodiment will be described.

As for the plurality of attack events, the event attribute information storing unit 105 stores the event attribute information for each attack event.

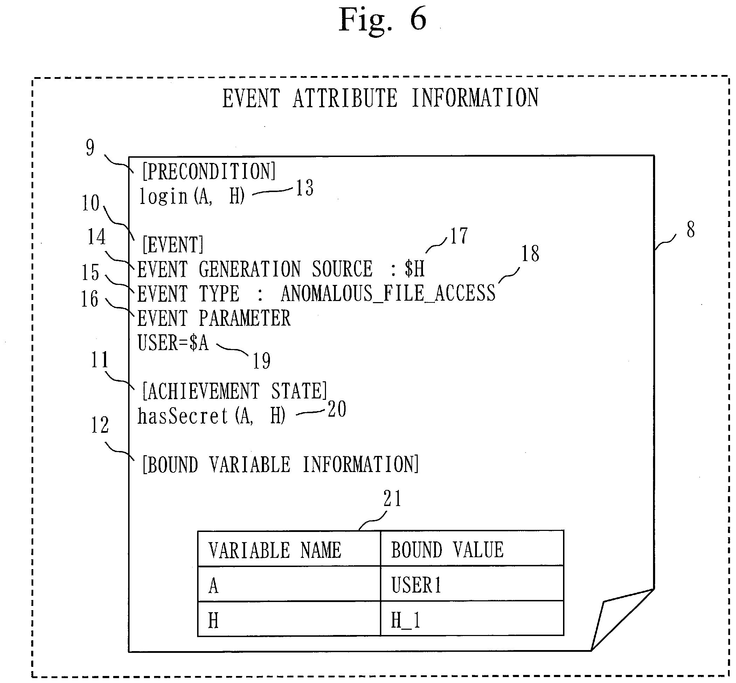

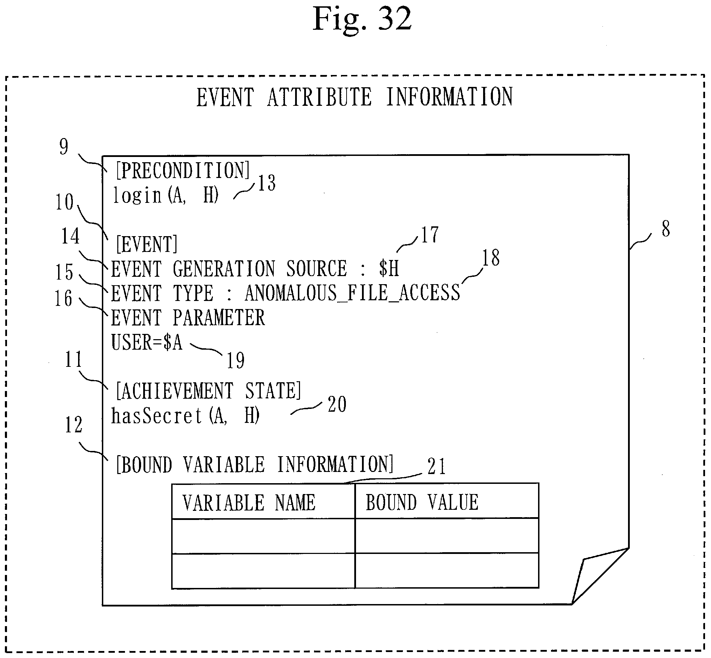

Figs. 6 and 32 are examples of event attribute information 8.

Fig. 6 is an example of the event attribute information 8 after reception of the detection alert and Fig. 32 is an example of the event attribute information before reception of the detection alert.

Hereinafter, details of the event attribute information 8 will be described with reference to Fig. 6.

As depicted in Fig. 6, the event attribute information 8 is configured with a precondition 9, an event 10, an achievement state 11, and bound variable information 12.

In the precondition 9, a prerequisite for the occurrence of an attack event is described in a form of a predicate logic.

That is, in the precondition 9, a progress stage (pre-event stage) of an attack before an attack event is observed is described.

For example, a predicate logic "login(A, H)" denoted by a reference sign 13 of Fig. 6 indicates that a state in which "A has logged in to H" is necessary as a precondition for the occurrence of an attack event. It is to be noted that "A" and "H" shown by the reference sign 13 are variables and specific values and so forth obtained from the detection alert 400 are held in the fields of the bound variable information 12.

The event 10 indicates an attack event which is observed in the information system 200 in a process of an attack on the information system 200.

The event 10 includes an event generation source 14, an event type 15, and an event parameter 16.

The event generation source 14 indicates an event generation source of an attack event covered by the event attribute information 8.

A reference sign 17 denotes an acceptable value as an event generation source, and, in the example of Fig. 6, the event generation source 14 is correlated with the precondition 13 by the variable H (a dollar sign ($) at the beginning of "$H" indicates that H is a variable).

The event type 15 indicates the type of an attack event covered by the event attribute information 8.

Specifically, the event type 15 is designated as indicated by a reference sign 18.

The specific value (the reference sign 18) of the event type 15 is also referred to as event type information.

The event parameter 16 indicates a parameter of an event.

In the event parameter 16, a value covered by the event attribute information 8 is designated.

In the example of Fig. 6, by a reference sign 19, a parameter whose name is "USER" is required to have the same value as that of the variable A shown by the reference sign 13.

The achievement state 11 indicates, by using a predicate logic, a state which the attacker has achieved at the time of occurrence of an attack event coinciding with the items of the reference signs 14 to 16 of the event attribute information 8.

That is, in the achievement state 11, the progress stage (post-event stage) of the attack after the attack event coinciding with the items of the reference signs 14 to 16 is detected is described.

The achievement state 11 is also referred to as a progress state.

In the example of Fig. 6, "hasSecret(A, H)" denoted by a reference sign 20 indicates a stage in which "a user A has obtained confidential information of a host H".

As described earlier, before reception of the detection alert, that is, in the event attribute information which is stored in the event attribute information storing unit 105, as depicted in Fig. 32, in the bound variable information 12, no value is described (the bound variable information 12 is a blank field).

When the alert receiving unit 101 receives the detection alert 400, the alert receiving unit 101 adds the values of variables described in the detection alert 400 to the bound variable information 12 and the event attribute information 8 of Fig. 6 is obtained.

The detection alert 400 provides, as in the case of the event attribute information 8 of Fig. 6, a notification of an event generation source, an event type, and an event parameter.

In the event attribute information 8 of Fig. 6, the values of variables of the event generation source 17 and the event parameter 19 are not specified; however, in the detection alert 400, the values of variables of the event generation source and the event parameter are specified.

Fig. 6 depicts the bound variable information 12 which is generated when the alert receiving unit 101 receives the detection alert 400 in which "USER1" is described as the specific value of the variable "A" and "H_1" is described as the specific value of the variable "H".

That is, in the example of Fig. 6, the alert receiving unit 101 describes "USER1" which is the specific value of the variable "A", in a bound value for the variable name "A" in the bound variable information 12 and describes "H-1" which is the specific value of the variable "H", in a bound value for the variable name "H" in the bound variable information 12.

The above-described event attribute information 8 is defined in advance for a plurality of attack events which presumably occur in a targeted attack and is stored in the event attribute information storing unit 105 in a retrievable state.

It is to be noted that "USER1" and "H_1 ", which are the bound values described in the fields of the bound variable information 12, are the system component elements 300 included in the information system 200.

Every time the detection alert 400 is received, the scenario storing unit 106 stores the event attribute information of the detected event whose notification has been provided by the detection alert 400 as a scenario, by correlating the event attribute information with the event involvement element whose notification has been provided by the detection alert 400.

That is, the scenario is a set of the event attribute information of the detected event, the set being grouped for each system component element 300.

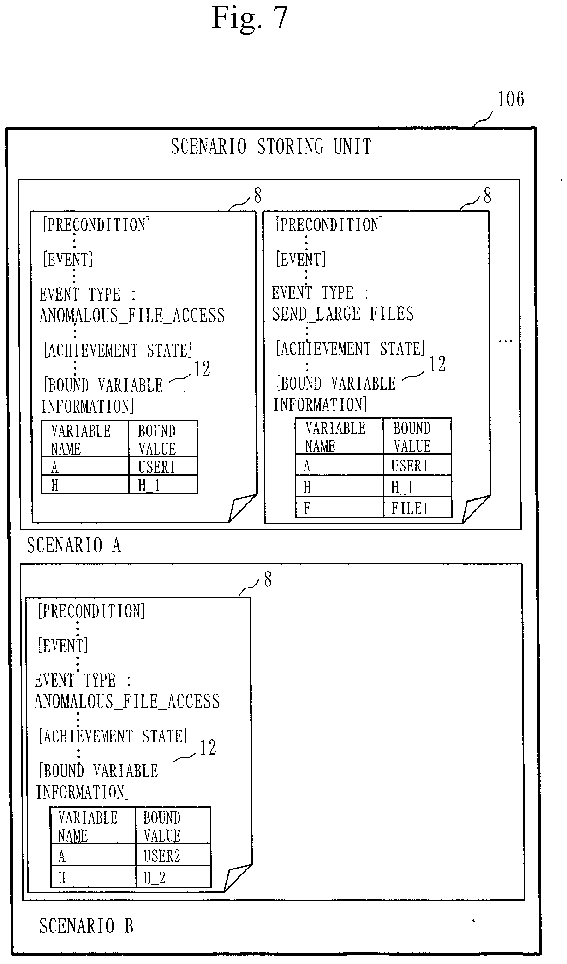

Fig. 7 depicts an example of the scenario. In Fig. 7, an example in which a scenario A and a scenario B are stored in the scenario storing unit 106 is depicted.

For the scenario A, the event attribute information 8 in which the event type is "ANOMALOUS_FILE_ACCESS" and the event attribute information 8 in which the event type is "SEND LARGE FILES" are stored.

These pieces of event attribute information 8 are stored as a series of attack activities of the attacker in the same scenario, since the bound value of the variable A is "USER1" and the bound value of the variable H is "H_1" in both of these pieces of event attribute information 8.

On the other hand in the scenario B, the event attribute information 8 in which the event type is "ANOMALOUS_FILE_ACCESS" is stored.

Although the event attribute information 8 in which the event type is "ANOMALOUS_FILE_ACCESS" is also stored in the scenario A, since the stored bound variable information 12 is different, the above event attribute information 8 is stored in the different scenario B.

When an attack event which attacks the information system 200 is detected by the monitoring device 500, the alert receiving unit 101 receives the detection alert 400 from the monitoring device 500 via the receiver 903.

The detection alert 400 includes an identifier (such as an IP address and a port number) of a source of a packet which may have been transmitted as a part of an attack on the information system 200 and an identifier (such as an IP address and a port number) of a destination of the packet.

Furthermore, the detection alert 400 includes a protocol such as Transmission Control Protocol (TCP) or User Datagram Protocol (UDP) and event type information of the detected attack event (such as log-in or port scanning).

As described earlier, the detected attack event whose notification has been provided by the detection alert 400 is the detected event, and a system component element which is a source of a packet which may have been transmitted as a part of an attack and a system component element which is a destination of the packet are the event involvement elements.

As an example of the detection alert 400, there is an Intrusion Detection System (IDS) alert.

Moreover, the alert receiving unit 101 outputs, to the event attribute information retrieving unit 102, the event type information of the detected event whose notification has been provided by the detection alert 400 and receives the event attribute information 8 corresponding to the detected event from the event attribute information storing unit 105 via the event attribute information retrieving unit 102.

Furthermore, the alert receiving unit 101 describes the specific value of a variable obtained from the detection alert 400 in the bound variable information 12 of event attribute information 402 of the detected event received from the event attribute information storing unit 105.

In addition, the alert receiving unit 101 outputs, to the attack event registering unit 132 in the scenario managing unit 103, the event attribute information 402 of the detected eventwhose bound variable information 12 describes the specific value of the variable.

The event attribute information retrieving unit 102 receives the event type information of the detected event from the alert receiving unit 101 and receives the event attribute information 402 corresponding to the received event type information from the event attribute information storing unit 105.

Then, the event attribute information retrieving unit 102 outputs, to the alert receiving unit 101, the event attribute information 402 received from the event attribute information storing unit 105.

In the scenario managing unit 103, the attack event registering unit 132 receives the event attribute information 402 of the detected event from the alert receiving unit 101.

Then, the attack event registering unit 132 transmits the received event attribute information 402 of the detected event to the scenario retrieving unit 141 in the scenario controlling unit 104.

As will be described later, the scenario retrieving unit 141 adds the event attribute information 402 of the detected event to the scenario in the scenario storing unit 106.

The monitor event designating unit 131 designates a candidate for an attack event which can occur next to the detected event by involvement of the event involvement element as a monitor event.

More specifically, the monitor event designating unit 131 receives the event attribute information of the detected event from the scenario updating unit 142 and extracts the predicate logic of the achievement state from the received event attribute information of the detected event. Then, the monitor event designating unit 131 acquires the event attribute information in which the predicate logic extracted from the event attribute information of the detected event is described in the precondition from the event attribute information storing unit 105 via the event attribute information retrieving unit 102. If there are a plurality of pieces of corresponding event attribute information, the monitor event designating unit 131 acquires a plurality of pieces of event attribute information.

Next, the monitor event designating unit 131 checks whether or not the acquired event attribute information has been added to the scenario and whether or not the precondition of the acquired event attribute information is satisfied by the achievement state of the event attribute information of the detected event.

If the acquired event attribute information has not yet been added to the scenario and the precondition of the acquired event attribute information is satisfied by the achievement state of the event attribute information of the detected event, the monitor event designating unit 131 designates the attack event covered by the acquired event attribute information as a monitor event.

Furthermore, the monitor event designating unit 131 stores the specific value of the bound variable information 12 of the event attribute information of the detected event in the bound variable information 12 of the event attribute information of the monitor event.

Hereinafter, the event attribute information of the monitor event after the specific value is described in the bound variable information 12 thereof will be referred to as monitor event information.

As the monitor event information, there are two types of monitor event information: monitor event information which is added to the scenario of the event involvement element and monitor event information which is added to the scenario of the involvement candidate element. In the following description, the monitor event information which is added to the scenario of the event involvement element will be referred to as monitor event information of the event involvement element, and the monitor event information which is added to the scenario of the involvement candidate element will be referred to as monitor event information of the involvement candidate element.

The monitor event designating unit 131 transmits the monitor event information of the event involvement element to the involvement candidate element designating unit 143.

Moreover, the monitor event designating unit 131 receives, from the involvement candidate element designating unit 143, the monitor event information of the involvement candidate element and the scenario of the involvement candidate element.

Furthermore, the monitor event designating unit 131 transmits the monitor event information of the involvement candidate element and the scenario of the involvement candidate element received from the involvement candidate element designating unit 143 to the scenario updating unit 142.

The scenario updating unit 142 updates the scenario of the involvement candidate element. Specifically, the scenario updating unit 142 adds the monitor event information of the involvement candidate element to the scenario of the involvement candidate element.

It is to be noted that the processing which is performed by the monitor event designating unit 131 is referred to as monitor event designation processing.

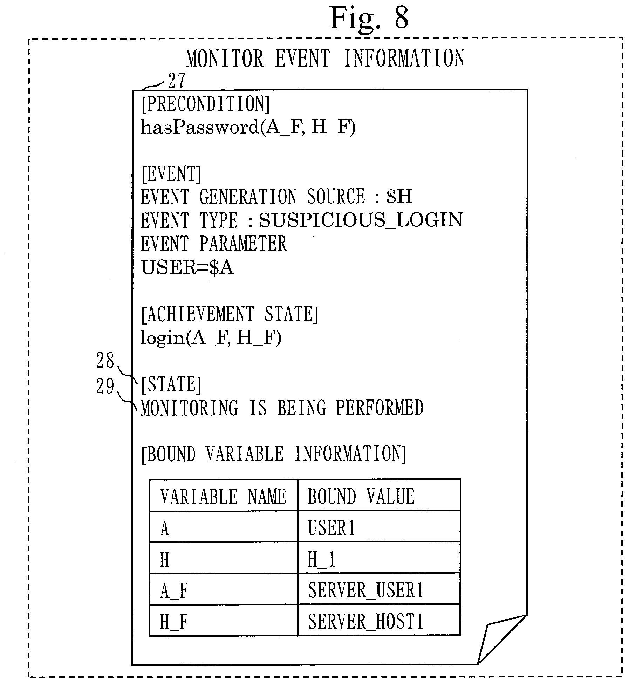

Fig. 8 depicts an example of monitor event information 27.

As depicted in Fig. 8, in addition to the items included in the event attribute information 8 of Fig. 6, the monitor event information 27 includes a "state" attribute denoted by a reference sign 28.

As shown by a reference sign 29, the "state" attribute indicates "monitoring is being performed" and is differentiated from the event attribute information of the detected event whose notification has been provided by the detection alert 400.

It is to be noted that the monitor event information 27 of the event involvement element and the monitor event information 27 of the involvement candidate element differ from each other in the bound value of the bound variable information.

That is, in the bound variable information of the monitor event information 27 of the event involvement element, the specific value described in the detection alert 400 is described.

On the other hand, in the bound variable information of the monitor event information 27 of the involvement candidate element, the bound value of the bound variable information of the event attribute information in the scenario of the involvement candidate element is described.

The monitoring instructing unit 133 instructs the monitoring device 500 to monitor the monitor event in the event involvement element and the monitor event in the involvement candidate element.

More specifically, the monitoring instructing unit 133 acquires, from the monitor event designating unit 131, the monitor event information 27 of the event involvement element and the monitor event information 27 of the involvement candidate element, and transmits the acquired monitor event information 27 of the event involvement element and the acquired monitor event information 27 of the involvement candidate element to the monitoring device 500 via the transmitter 904.

In the scenario controlling unit 104, the scenario retrieving unit 141 acquires the event attribute information 402 of the detected event from the attack event registering unit 132, and acquires the scenario of the event involvement element from the scenario storing unit 106. Moreover, the scenario retrieving unit 141 outputs the event attribute information 402 of the detected event and the scenario of the event involvement element to the scenario updating unit 142.

Furthermore, the scenario retrieving unit 141 acquires the monitor event information 27 of the event involvement element from the involvement candidate element designating unit 143, and acquires the scenario of the involvement candidate element from the scenario storing unit 106 based on the monitor event information 27 of the event involvement element. In addition, the scenario retrieving unit 141 outputs the scenario of the involvement candidate element to the involvement candidate element designating unit 143.

If the scenario updating unit 142 acquires the event attribute information 402 of the detected event and the scenario of the event involvement element from the scenario retrieving unit 141, the scenario updating unit 142 adds the event attribute information 402 of the detected event to the scenario of the event involvement element and updates the scenario of the event involvement element. Then, the scenario updating unit 142 stores the updated scenario of the event involvement element in the scenario storing unit 106.

Moreover, if the scenario updating unit 142 receives only the event attribute information 402 of the detected event from the scenario retrieving unit 141, the scenario updating unit 142 newly generates a scenario of the event involvement element. Then, the scenario updating unit 142 adds the event attribute information 402 of the detected event to the newly generated scenario of the event involvement element and stores the scenario of the event involvement element in the scenario storing unit 106.

Furthermore, if the scenario updating unit 142 acquires the monitor event information 27 of the event involvement element and the scenario of the event involvement element from the monitor event designating unit 131, the scenario updating unit 142 adds the monitor event information 27 of the event involvement element to the scenario of the event involvement element and updates the scenario of the event involvement element. Then, the scenario updating unit 142 stores the updated scenario of the event involvement element in the scenario storing unit 106.

In addition, if the scenario updating unit 142 acquires the monitor event information 27 of the involvement candidate element and the scenario of the involvement candidate element from the monitor event designating unit 131, the scenario updating unit 142 adds the monitor event information 27 of the involvement candidate element to the scenario of the involvement candidate element and updates the scenario of the involvement candidate element. Then, the scenario updating unit 142 stores the updated scenario of the involvement candidate element in the scenario storing unit 106.

The involvement candidate element designating unit 143 acquires the monitor event information 27 of the event involvement element from the monitor event designating unit 113 and checks whether or not a cooperative prediction condition is included in the acquired monitor event 27 of the event involvement element. If the cooperative prediction condition is included in the monitor event information 27 of the event involvement element, the involvement candidate element designating unit 143 transmits the monitor event information 27 of the event involvement element to the scenario retrieving unit 141. Then, the involvement candidate element designating unit 143 acquires, from the scenario retrieving unit 141, a scenario including the event attribute information having the cooperative prediction condition in the achievement state as the scenario of the involvement candidate element.

Moreover, the involvement candidate element designating unit 143 rewrites the bound variable information of the monitor event information 27 of the event involvement element by using the bound value of the bound variable information of the event attribute information having the cooperative prediction condition in the achievement state in the acquired scenario of the involvement candidate element, and obtains the monitor event information 27 of the involvement candidate element.

Then, the involvement candidate element designating unit 143 transmits the monitor event information 27 of the involvement candidate element and the scenario of the involvement candidate element to the monitor event designating unit 131.

It is to be noted that the processing which is performed by the involvement candidate element designating unit 143 is referred to as involvement candidate element designation processing.

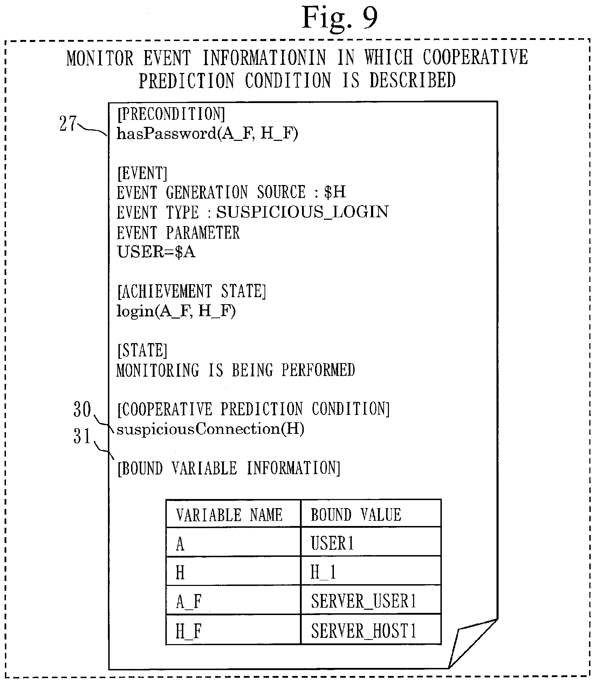

Fig. 9 depicts an example of the monitor event information 27 in which the cooperative prediction condition is included.

In the monitor event information 27 of Fig. 9, "suspiciousConnection(H)" denoted by a reference sign 31 is described as a cooperative prediction condition 30. The cooperative prediction condition 30 is an attribute value of an attack event related to the monitor event.

As described earlier, if the cooperative prediction condition 30 is included in the monitor event information 27 of the event involvement element, the involvement candidate element designating unit 143 transmits the monitor event information 27 of the event involvement element to the scenario retrieving unit 141. Then, the scenario retrieving unit 141 extracts a scenario which includes the event attribute information which describes the predicate logic of the cooperative prediction condition 30 in the achievement state, as the scenario of the involvement candidate element. In the example of Fig. 9, the scenario retrieving unit 141 extracts a scenario which includes the event attribute information which describes "suspiciousConnection(H)" in the achievement condition, as the scenario of the involvement candidate element.

Moreover, as described earlier, the involvement candidate element designating unit 143 generates the monitor event information 27 of the involvement candidate element by using the bound value of the bound variable information of the event attribute information which describes the same predicate logic as that of the cooperative prediction condition 30 in the achievement state, among the event attribute information in the scenario of the involvement candidate element. In the example of Fig. 9, the involvement candidate element designating unit 143 generates the monitor event information 27 of the involvement candidate element by using the bound value of the bound variable information of the event attribute information which describes "suspiciousConnection(H)" in the achievement condition.

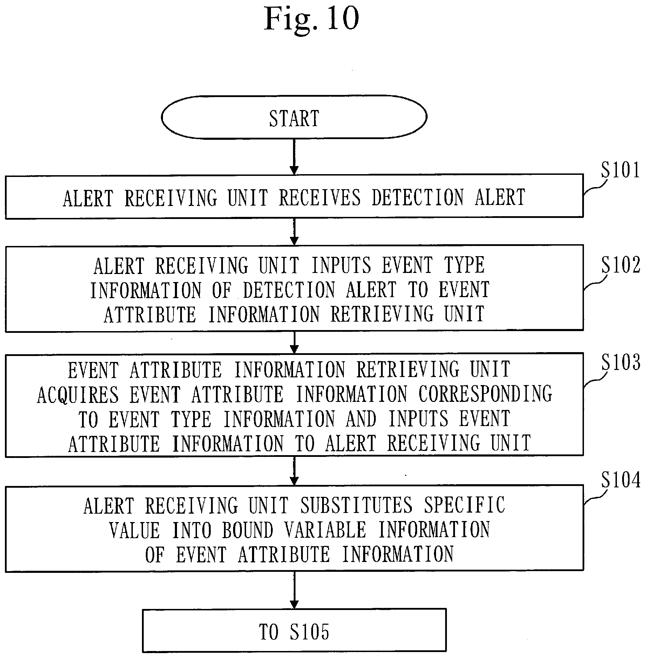

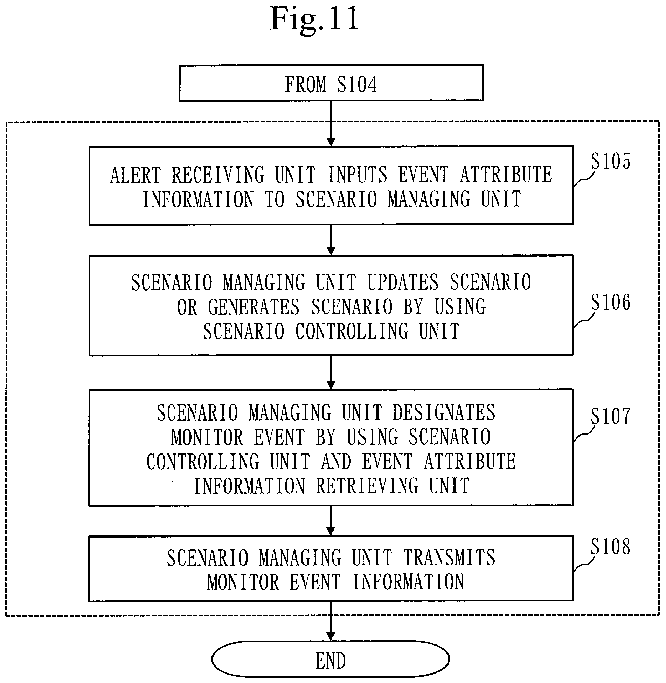

Next, the operation of the information processing device 100 according to the present embodiment will be described with reference to Figs. 10 and 11.

Figs. 10 and 11 are flowcharts depicting the flow of overall processing of the information processing device 100 according to the present embodiment.

First, in Step S101, the alert receiving unit 101 receives the detection alert 400.

The detection alert 400 is, as described earlier, a warning message which is transmitted from the monitoring device 500.

Next, in Step S102, the alert receiving unit 101 inputs the event type information (for example, ANOMALOUS_FILE_ACCESS) of the detection alert 400 to the event attribute information retrieving unit 102.

Next, in Step S103, the event attribute information retrieving unit 102 acquires the event attribute information corresponding to the event type information from the event attribute information storing unit 105 and inputs the event attribute information to the alert receiving unit 101.

Specifically, the event attribute information retrieving unit 102 acquires the event attribute information in which the same event type as the event type of the event type information is described.

Next, in Step S104, the alert receiving unit 101 substitutes a specific value into the bound variable information of the event attribute information. Specifically, the alert receiving unit 101 substitutes the specific value of the event generation source and the specific value of the event parameter obtained from the detection alert 400 into the bound variable information of the event attribute information obtained from the event attribute information retrieving unit 102.

Next, in Step S105, the alert receiving unit 101 inputs, to the scenario managing unit 103, the event attribute information in which the specific value is described in the bound variable information.

Next, in Step S106, by using the scenario controlling unit 104, the scenario managing unit 103 updates the scenario in the scenario storing unit 106 or generates a scenario.

Next, in Step S107, the scenario managing unit 103 designates the monitor event by using the scenario controlling unit 104 and the event attribute information retrieving unit 102 and generates monitor event information 401.

Next, in Step S108, the scenario managing unit 103 transmits the monitor event information 401 to the monitoring device 500.

Next, the details of the operation in Steps S105 to S108 will be described by using the detailed configurations of the scenario managing unit 103 and the scenario controlling unit 104 in the information processing device 100, which are depicted in Fig. 3.

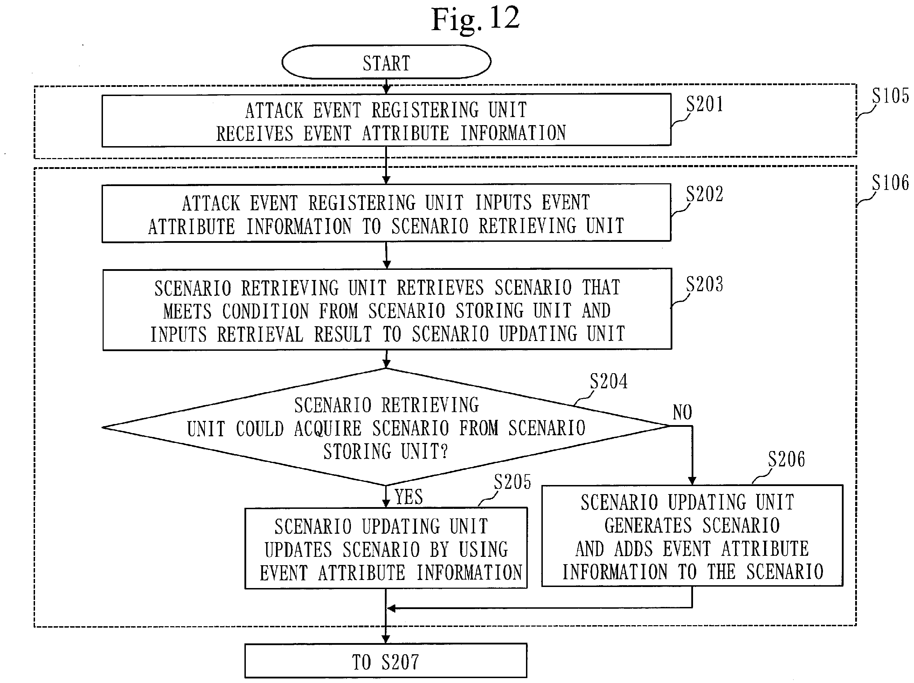

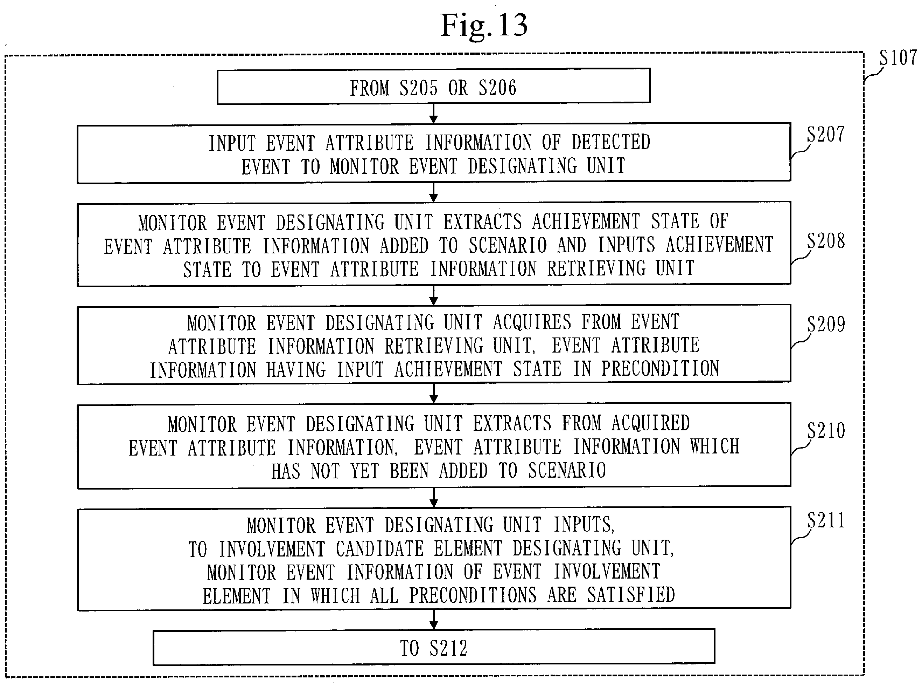

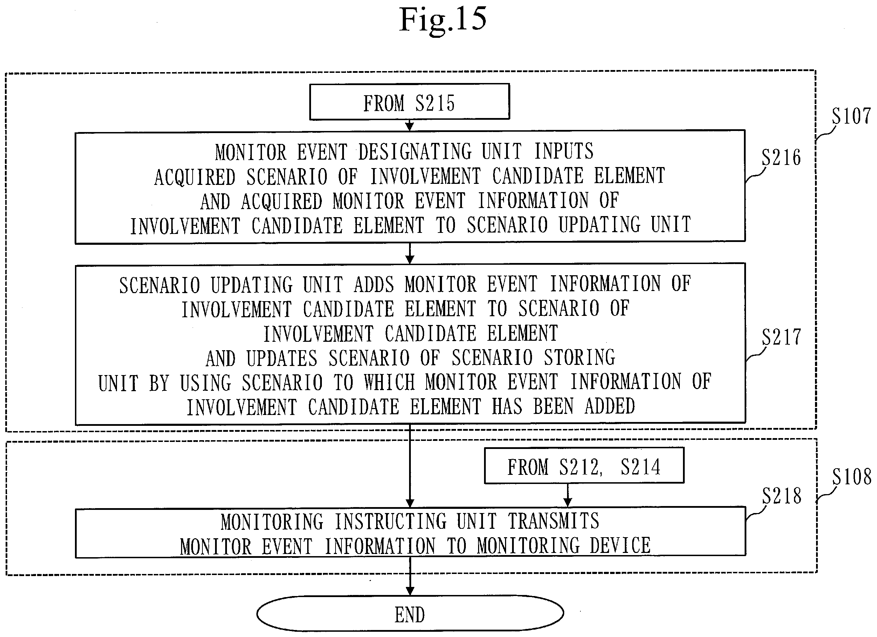

The flow of the operation will be described with reference to Figs. 12, 13, 14, and 15.

Figs. 12, 13, 14, and 15 are flowcharts depicting the flow of the operation of the detailed configurations of the scenario managing unit 103 and the scenario controlling unit 104 in the information processing device 100 according to the present embodiment.

In Figs. 12, 13, 14, and 15, Step S201 corresponds to Step S105, Steps S202 to S206 correspond to Step S106, Steps S207 to S217 correspond to Step S107, and Step S218 corresponds to Step S108.

First, in Step S201, the attack event registering unit 132 receives, from the alert receiving unit 101, the event attribute information in which a specific value is described in the bound variable information.

Next, in Step S202, the attack event registering unit 132 inputs the received event attribute information to the scenario retrieving unit 141.

Next, in Step S203, the scenario retrieving unit 141 retrieves a scenario that meets a condition from the scenario storing unit 106 and outputs the scenario obtained by retrieval to the scenario updating unit 142.

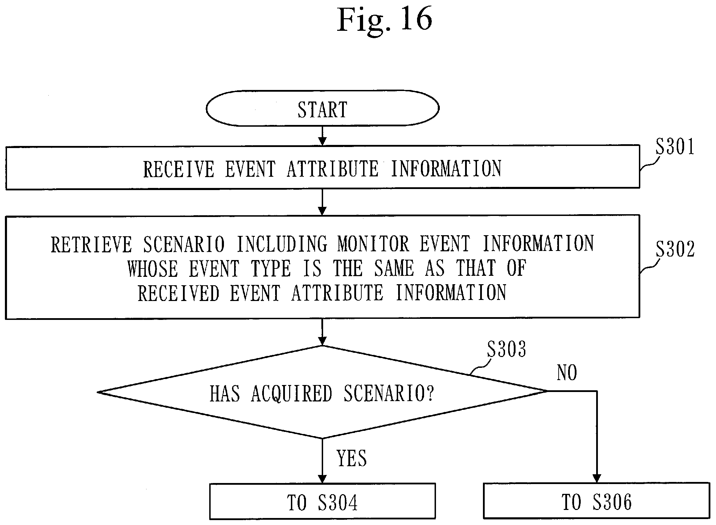

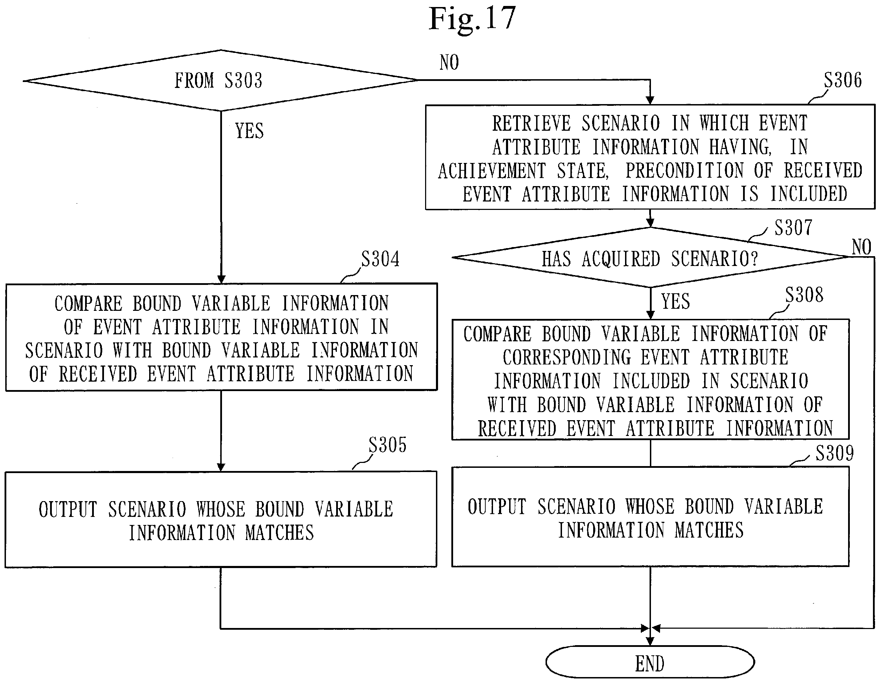

The flow of specific processing will be described with reference to Figs. 16 and 17.

Figs. 16 and 17 are flowcharts explaining the flow of an operation by which the scenario retrieving unit 141 acquires a scenario that meets a condition from the scenario storing unit 106 when receiving the event attribute information from the attack event registering unit 132.

First, in Step S301, the scenario retrieving unit 141 receives the event attribute information from the attack event registering unit 132.

Next, in Step S302, the scenario retrieving unit 141 retrieves, from the scenario storing unit 106, a scenario which includes the monitor event information whose event type is the same as that of the received event attribute information.

Next, in Step S303, the processing branches off depending on whether or not the scenario retrieving unit 141 has acquired a scenario as a result of Step S302. If the scenario retrieving unit 141 has acquired a scenario, S304 is performed. On the other hand, if the scenario retrieving unit 141 does not acquire a scenario, S306 is performed.

In Step S304, the scenario retrieving unit 141 compares the bound variable information of the monitor event information included in the scenario obtained in S302 with the bound variable information of the received event attribute information.

Next, in Step S305, the scenario retrieving unit 141 outputs, to the scenario updating unit 142, the scenario which includes the monitor event information whose bound variable information is the same as that of the received event attribute information and ends the processing.

In Step S306, the scenario retrieving unit 141 retrieves, from the scenario storing unit 106, a scenario which includes the event attribute information which describes in the achievement state, the same predicate logic as the predicate logic of the precondition described in the received event attribute information.

Next, in Step S307, the processing branches off depending on whether or not the scenario retrieving unit 141 has acquired a scenario as a result of S306. If the scenario retrieving unit 141 has acquired a scenario, S308 is performed. On the other hand, if the scenario retrieving unit 141 does not acquire a scenario, the processing is ended.

In Step S308, the scenario retrieving unit 141 compares the corresponding event attribute information included in the scenario obtained in S306 with the bound variable information of the received event attribute information.

Next, in Step S309, the scenario retrieving unit 141 outputs, to the scenario updating unit 142, the scenario which includes the event attribute information whose bound variable information is the same as that of the received event attribute information and ends the processing.

Next, in Step S204 of Fig. 12, the processing branches off depending on whether or not the scenario retrieving unit 141 could acquire a scenario from the scenario storing unit 106 in S203. If the scenario retrieving unit 141 could acquire a scenario, S205 is performed; if the scenario retrieving unit 141 cannot acquire a scenario, S206 is performed.

In Step S205, the scenario updating unit 142 updates the scenario. More specifically, the scenario retrieving unit 141 inputs the acquired scenario and the event attribute information received in Step S201 to the scenario updating unit 142, and the scenario updating unit 142 adds the input event attribute information to the input scenario. At this time, if the monitor event information having the same event type information as that of the event attribute information to be added is included in the scenario, the scenario updating unit 142 deletes the monitor event information and adds the input event attribute information to the scenario. Then, the scenario updating unit 142 updates the scenario of the scenario storing unit 106 by using the scenario to which the event attribute information has been added.

In Step S206, the scenario updating unit 142 generates a scenario and adds the input event attribute information to the scenario. More specifically, the scenario retrieving unit 141 inputs the event attribute information received in Step S201 to the scenario updating unit 142, and the scenario updating unit 142 newly generates a scenario and adds the input event attribute information to the generated scenario. Then, the scenario updating unit 142 registers, in the scenario storing unit 106, the scenario to which the event attribute information has been added.

In Step S207, the scenario updating unit 142 inputs the event attribute information of the detected event received in Step S201 to the monitor event designating unit 131.

Next, in Step S208, the monitor event designating unit 131 extracts the achievement state of the event attribute information input from the scenario updating unit 142 and inputs the extracted achievement state to the event attribute information retrieving unit 102.

Next, in Step S209, the monitor event designating unit 131 acquires, from the event attribute information retrieving unit 102, the event attribute information having, in the precondition, the achievement state which has been input to the event attribute information retrieving unit 102.

Next, in Step S210, the monitor event designating unit 131 extracts, from the acquired event attribute information, the event attribute information which has not yet been added to the scenario, as a candidate for the monitor event information.

Next, in Step S211, the monitor event designating unit 131 selects, from among the candidates for the monitor event information, a candidate in which all the preconditions are satisfied as the monitor event information of the event involvement element and inputs the monitor event information of the event involvement element to the involvement candidate element designating unit 143.

It is to be noted that the event described in the field of the event type of the monitor event information of the event involvement element is the monitor event.

Next, in Step S212, the involvement candidate element designating unit 143 checks whether or not the monitor event information which describes the cooperative prediction condition is included in the input monitor event information of the event involvement element.

The subsequent processing branches off depending on whether or not the monitor event information which describes the cooperative prediction condition is present. If the monitor event information which describes the cooperative prediction condition is present, Step S213 is performed; if the monitor event information which describes the cooperative prediction condition is not present, S218 is performed.

In Step S213, the involvement candidate element designating unit 143 inputs, to the scenario retrieving unit 141, the monitor event information in which the cooperative prediction condition is described. The scenario retrieving unit 141 retrieves a scenario based on the cooperative prediction condition included in the monitor event information.

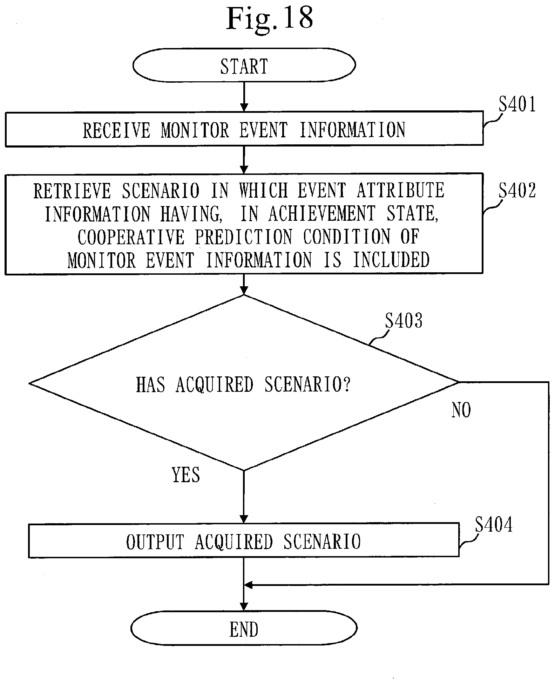

The flow of specific processing of the scenario retrieving unit 14 will be described with reference to Fig. 18.

Fig. 18 is a flowchart explaining the flow of an operation by which the scenario retrieving unit 141 acquires a scenario that meets a condition from the scenario storing unit 106 when receiving the monitor event information from the involvement candidate element designating unit 143.

First, in Step S401, the scenario retrieving unit 141 receives, from the involvement candidate element designating unit 143, the monitor event information in which the cooperative prediction condition is described.

Next, in Step S402, the scenario retrieving unit 141 retrieves, from the scenario storing unit 106, a scenario which includes the event attribute information having, in the achievement state, the same predicate logic as the predicate logic of the cooperative prediction condition included in the monitor event information. The scenario retrieving unit 141 retrieves, with no consideration given to the bound variable information, a scenario which includes the event attribute information having, in the achievement state, the same predicate logic as the predicate logic of the cooperative prediction condition included in the monitor event information.

Next, in Step S403, the processing branches off depending on whether or not the scenario retrieving unit 141 has acquired a corresponding scenario as a result of the retrieval in S402. If the scenario retrieving unit 141 has acquired the scenario, S404 is performed; if the scenario retrieving unit 141 has not acquired the scenario, the processing is ended.

In Step S404, the scenario retrieving unit 141 outputs the acquired scenario (the scenario of the involvement candidate element) to the involvement candidate element designating unit 143 and ends the processing.

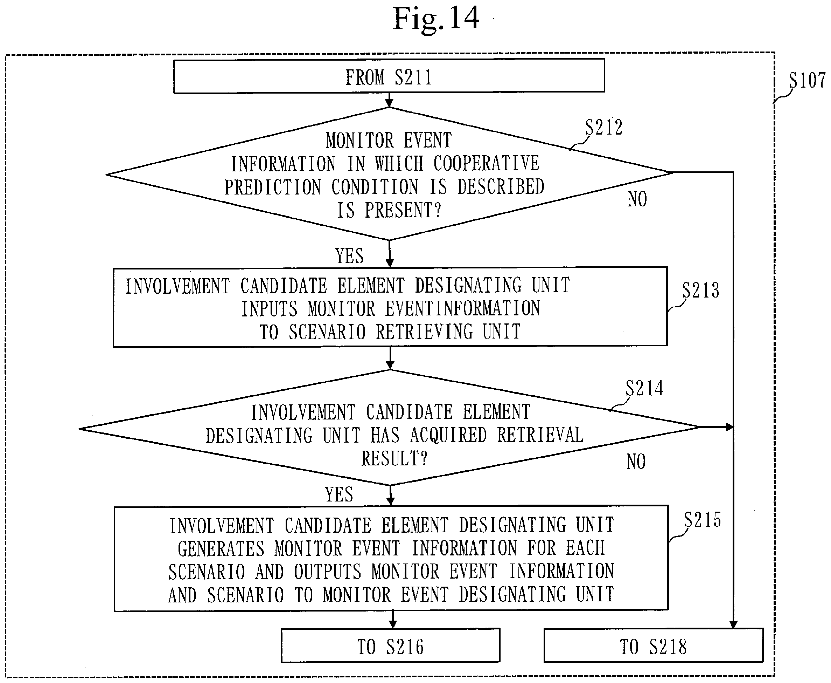

Next, in Step S214 of Fig. 14, the processing branches off depending on whether or not the involvement candidate element designating unit 143 has acquired the scenario of the involvement candidate element from the scenario retrieving unit 141. If the involvement candidate element designating unit 143 has acquired the scenario of the involvement candidate element from the scenario retrieving unit 141, processing S215 is performed; if the involvement candidate element designating unit 143 has not acquired the scenario of the involvement candidate element from the scenario retrieving unit 141, S218 is performed.

In Step S215, the involvement candidate element designating unit 143 generates the monitor event information of the involvement candidate element in which the bound variable information is set for each scenario which is the acquisition result, and outputs the generated monitor event information of the involvement candidate element and the scenario of the involvement candidate element to the monitor event designating unit 131. More specifically, the involvement candidate element designating unit 143 extracts, from the scenario acquired in Step S214, the event attribute information in which the predicate logic of the cooperative prediction condition is described in the achievement state and generates the monitor event information of the involvement candidate element by setting the specific value of the bound variable information of the extracted event attribute information in the bound variable information of the monitor event of the event involvement element acquired in Step S212. Then, the involvement candidate element designating unit 143 outputs, to the monitor event designating unit 131, the generated monitor event information of the involvement candidate element and the scenario of the involvement candidate element.

It is to be noted that the system component element covered by the scenario acquired by the involvement candidate element designating unit 143 in Step S214 corresponds to the involvement candidate element.

Next, in Step S216, the monitor event designating unit 131 inputs, to the scenario updating unit 142, a pair of the acquired scenario of the involvement candidate element and the acquired monitor event information of the involvement candidate element.

Next, in Step S217, the scenario updating unit 142 adds the monitor event information of the involvement candidate element to the scenario of the involvement candidate element and updates the scenario of the involvement candidate element in the scenario storing unit 106 by using the scenario of the involvement candidate element to which the monitor event information of the involvement candidate element has been added.

Next, in Step S218, the monitoring instructing unit 133 transmits the monitor event information 401 to the monitoring device 500. Specifically, the monitor event designating unit 131 inputs to the monitoring instructing unit 133, the monitor event information 401 of the event involvement element and the monitor event information 401 of the involvement candidate element, and the monitoring instructing unit 133 transmits to the monitoring device 500, the monitor event information 401 of the event involvement element and the monitor event information 401 of the involvement candidate element.

It is to be noted that, in the case of NO in Step S212 and in the case of NO in Step S214, since the monitor event information 401 of the involvement candidate element is not generated, the monitoring instructing unit 133 transmits only the monitor event information 401 of the event involvement element to the monitoring device 500.

### *** Description of the effect of the embodiment ***

As described above, in the present embodiment, if an attribute value of an attack event related to a monitor event is described in the monitor event information of an event involvement element as the cooperative prediction condition, the involvement candidate element designating unit designates, as an involvement candidate element, among system component elements other than the event involvement element, a system component element whose scenario includes the event attribute information which describes in the state value of the achievement state, the same attribute value as the attribute value described in the monitor event information of the event involvement element.

That is, in the present embodiment, since the involvement candidate element designating unit designates, as an involvement candidate element, a system component element which can be involved in the occurrence of a monitor event other than an event involvement element, monitoring of a monitor event in the involvement candidate element is made possible.

For example, assume that acquisition of a log-in password of a file server from a computer terminal A by an attacker is detected as a detected event. The information processing device according to the present embodiment can predict that the attacker will then log in to the file server from the computer terminal A as a monitor event, designate a computer terminal B which may be involved in the occurrence of the monitor event other than the computer terminal A as a involvement candidate element, and make the monitoring device monitor log-in to the file server from the computer terminal A and log-in to the file server from the computer terminal B.

As described above, according to the present embodiment, it is possible to detect an attack which is made via a system component element other than an event involvement element and prevent detection failure.

### Embodiment 2.

### *** Description of the configuration ***

In the present embodiment, a configuration in which a scenario of an event involvement element and a scenario of an involvement candidate element are integrated will be described.

Hereinafter, a difference from Embodiment 1 will be mainly described. Matters which are not described in the following description are the same as those of Embodiment 1.

Also in the present embodiment, a system configuration example is as depicted in Fig. 1.

Moreover, also in the present embodiment, a functional configuration example of an information processing device 100 is as depicted in Fig. 2, but an internal configuration example of a scenario controlling unit 104 is different from that of Embodiment 1.

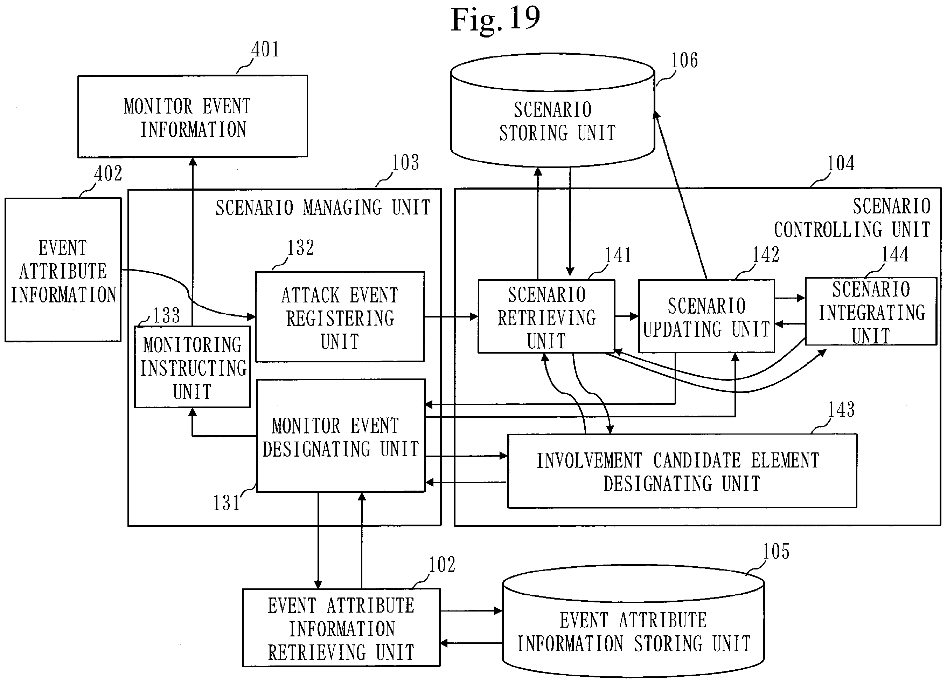

Fig. 19 depicts an example of the detailed configurations of a scenario managing unit 103 and the scenario controlling unit 104 according to the present embodiment.

As depicted in Fig. 19, the scenario managing unit 103 has the same configuration as that of Embodiment 1, and, in the scenario controlling unit 104, in addition to the configuration of Embodiment 1, a scenario integrating unit 144 is disposed.

The scenario integrating unit 144 integrates a scenario of an event involvement element and a scenario of an involvement candidate element of a scenario storing unit 106.

More specifically, the scenario integrating unit 144 integrates a scenario of the event involvement element and a scenario of an involvement candidate element if the scenario of the event involvement element and the scenario of the involvement candidate element are stored in the scenario storing unit 106 and a detection alert 400 from a monitoring device 500 provides a notification of a monitor event as a newly detected attack event and a notification of the involvement candidate element as a system component element involved in the occurrence of the monitor event.

It is to be noted that, also in the present embodiment, as depicted in Fig. 4, the information processing device 100 is configured with hardware such as a processor 901, a storage device 902, a receiver 903, and a transmitter 904.

### *** Description of an operation ***

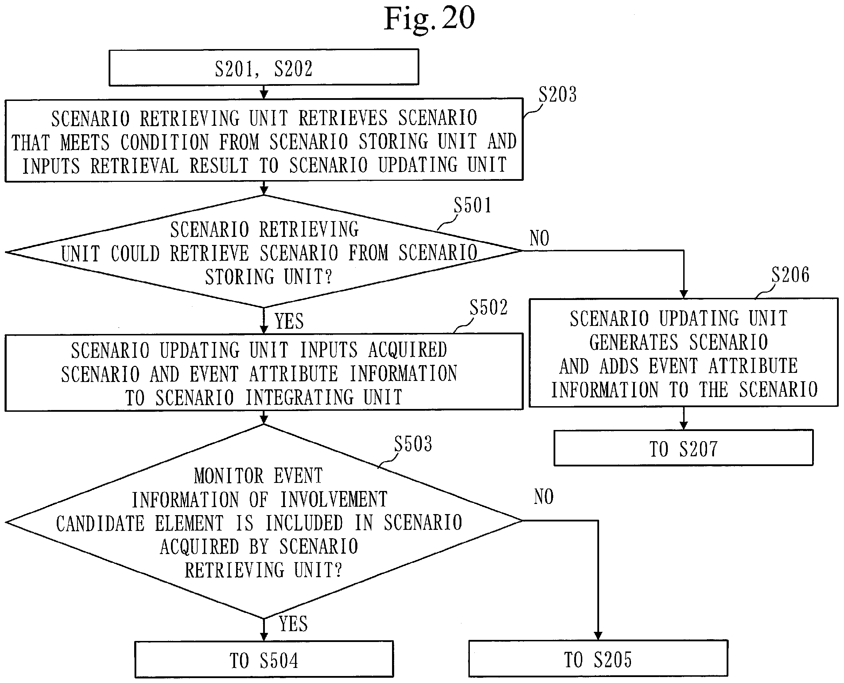

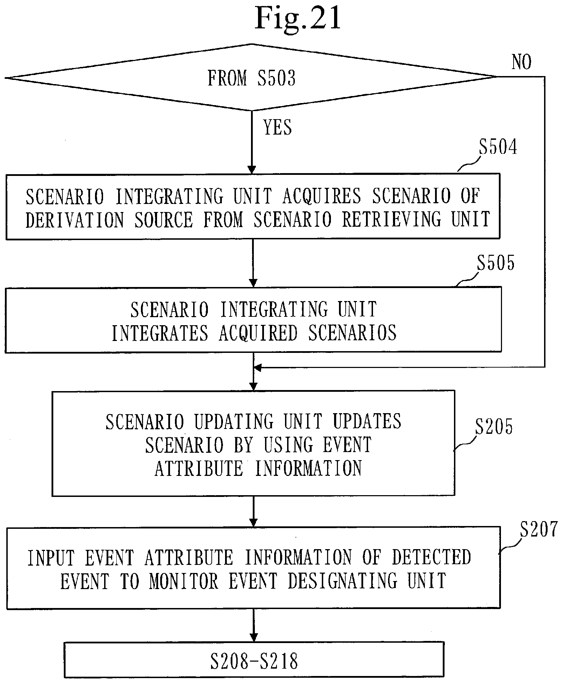

Next, an operation example of the information processing device 100 according to Embodiment 2 will be described with reference to Figs. 20 and 21.

Figs. 20 and 21 are flowcharts depicting the flow of detailed operations of the scenario managing unit 103 and the scenario controlling unit 104 of the information processing device 100 according to Embodiment 2.

First, Steps S201 to S203 are performed. It is to be noted that, since S201 to S203 are the same as those depicted in Fig. 12, explanations thereof will be omitted.

Next, in Step S501, the processing branches off depending on whether or not the scenario retrieving unit 141 could acquire a scenario from the scenario storing unit 106 in S203. If the scenario retrieving unit 141 could acquire a scenario, S502 is performed; if the scenario retrieving unit 141 cannot acquire a scenario, S206 is performed.

In Step S502, the scenario updating unit 142 inputs the scenario acquired from the scenario retrieving unit 141 and the event attribute information input from the attack event registering unit 132 to the scenario integrating unit 144.

Next, in Step S503, the processing branches off depending on whether or not the monitor event information of an involvement candidate element is included in the scenario acquired by the scenario retrieving unit 141. If the monitor event information of the involvement candidate element is included in the scenario acquired by the scenario retrieving unit 141, that is, if the detected event whose notification has been provided by the detection alert 400 is a monitor event and a system component element involved in the occurrence of the detected event whose notification has been provided by the detection alert 400 is the involvement candidate element, Step S504 is performed. On the other hand, if the monitor event information of the involvement candidate element is not included in the scenario acquired by the scenario retrieving unit 141, Step S205 is performed.

It is to be noted that the scenario integrating unit 144 can make a determination of S504 by checking whether or not monitor event information in which a cooperative prediction ID is described is included in the scenario.

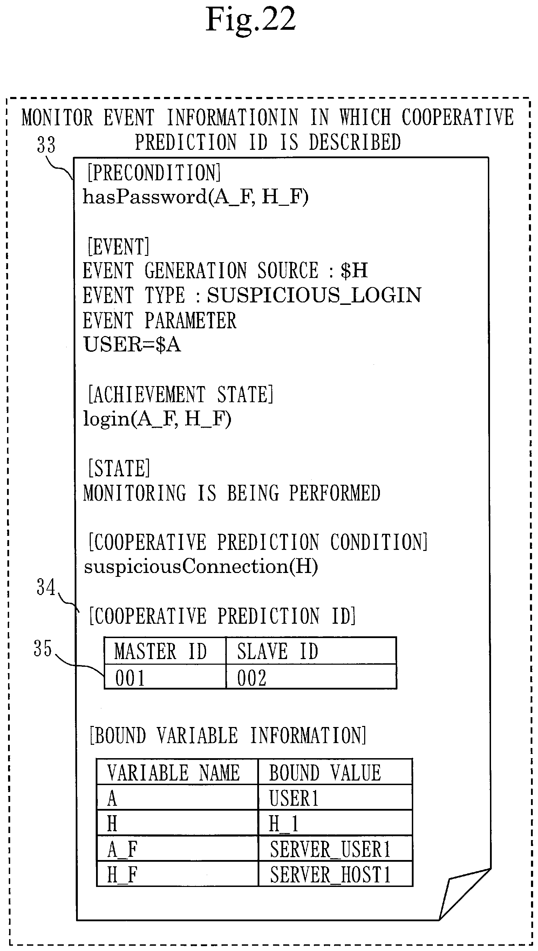

In Fig. 22, an example of the monitor event information including the cooperative prediction ID is depicted.

In monitor event information 33 of Fig. 22, a "cooperative prediction ID" is included as denoted by a reference sign 34, and, as shown by a reference sign 35, as elements of the cooperative prediction ID, there are a master ID and a slave ID.

The master ID shown by the reference sign 35 is an ID of the monitor event information (the monitor event information of the event involvement element) which is a starting point of addition of the monitor event information of the involvement candidate element to the scenario of the involvement candidate element. When the involvement candidate element designating unit 143 is ready to add the monitor event information to another scenario (the scenario of the involvement candidate element), the involvement candidate element designating unit 143 gives the master ID to the monitor event information (the monitor event information of the event involvement element) which is a starting point. It is to be noted that a value given to the master ID is a separate value set for each master ID.

The slave ID shown by the reference sign 35 is an ID of the monitor event information (the monitor event information of the involvement candidate element) derived from the monitor event information (the monitor event information of the event involvement element) with a master ID given thereto.

When the involvement candidate element designating unit 143 adds the monitor event information of the involvement candidate element to the scenario of an involvement element, the slave ID is given to the monitor event information of the involvement candidate element. It is to be noted that a value given to the slave ID is a separate value set for each slave ID.

Hereinafter, the monitor event information (the monitor event information of the event involvement element) with a master ID given thereto is also referred to as monitor event information of a derivation source, and the monitor event information (the monitor event information of the involvement candidate element) with a slave ID given thereto is also referred to as monitor event information of a derivation destination.

If the monitor event information in which the cooperative prediction ID 34 is described is included in the scenario acquired by the scenario retrieving unit 141 and the master ID and the slave ID are described in the cooperative prediction ID 34, the scenario integrating unit 144 makes a determination YES in Step S503.

On the other hand, if only the master ID is present in the cooperative prediction ID 34, the scenario integrating unit 144 makes a determination NO in Step S503.

In Step S504, the scenario integrating unit 144 acquires, from the scenario retrieving unit 141, a scenario (a scenario of event involvement information) in which the monitor event information of a derivation source (the monitor event information of the event involvement element) of the monitor event information of the involvement candidate element is included.

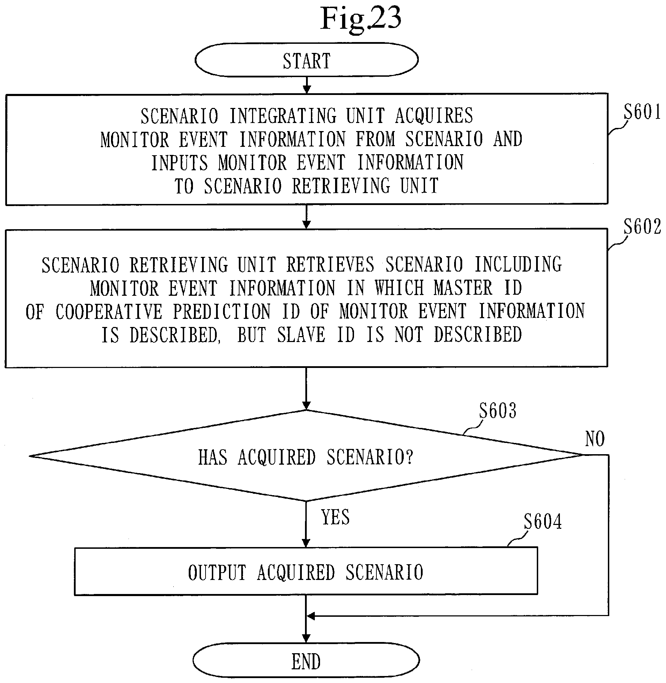

The flow of specific processing in Step S504 will be described with reference to Fig. 23.

Fig. 23 depicts the flow of an operation by which the scenario integrating unit 144 retrieves a scenario (a scenario of event involvement information) in which the monitor event information of a derivation source (the monitor event information of the event involvement element) of the monitor event information of the involvement candidate element is included.

First, in Step S601, the scenario integrating unit 144 acquires, from the scenario input from the scenario updating unit 142, the monitor event information of the involvement candidate element and inputs the acquired monitor event information of the involvement candidate element to the scenario retrieving unit 141.

Next, in Step S602, the scenario retrieving unit 141 retrieves a scenario including the monitor event information in which the same master ID as the master ID of the cooperative prediction ID in the monitor event information of the involvement candidate element is described, but a slave ID is not described.

Next, in Step S603, the processing branches off depending on whether or not the scenario retrieving unit 141 has acquired a scenario as a result of the retrieval in S602. If the scenario retrieving unit 141 has acquired a scenario, S604 is executed; if the scenario retrieving unit 141 has not acquired a scenario, the processing is ended.

In Step S604, the scenario retrieving unit 141 outputs the scenario acquired by the retrieval in S602 to the scenario integrating unit 144 and ends the processing.

Next, in Step S505 of Fig. 21, the scenario integrating unit 144 integrates the scenario of a derivation source acquired in S504 and the scenario input from the scenario updating unit 142.

The scenario integrating unit 144 integrates scenarios by combining the event attribute information in two scenarios into one scenario. In so doing, if the same event type information is included in two scenarios, the scenario integrating unit 144 combines the bound variable information of the event attribute information so as to obtain one piece of event attribute information.

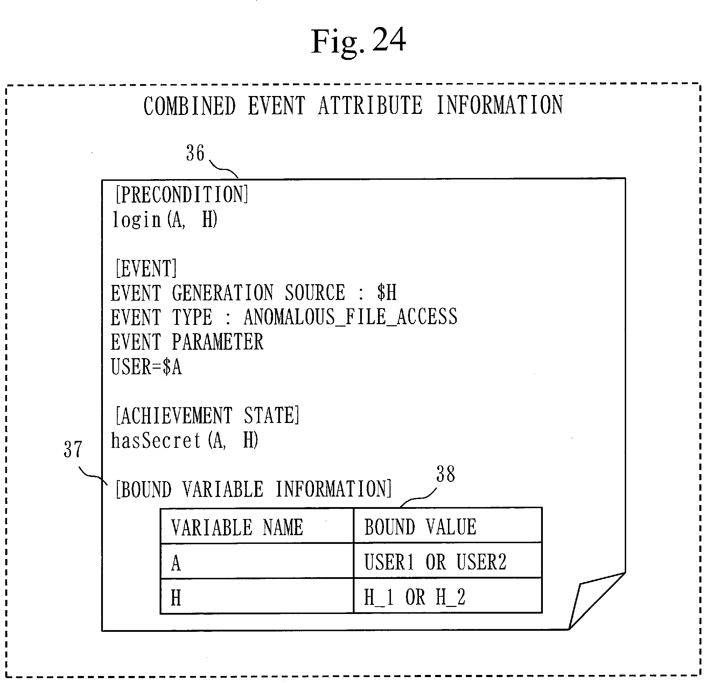

In Fig. 24, an example of the combined event attribute information is depicted.

In the example of Fig. 24, of event attribute information 36, in bound variable information denoted by a reference sign 37, as shown by a reference sign 38, elements of the variable name A and the variable name H are "USER1 OR USER2" and "H_1 OR H_2", respectively. Fig. 24 depicts an example in which the event attribute information in which "ANOMALOUS_FILE_ACCESS" is described as the event type and, in the bound variable information, "USER1" is described as the bound value of the variable A and "H_1" is described as the bound value of the variable H and the event attribute information in which "ANOMALOUS_FILE_ACCESS" is described as the event type and, in the bound variable information, "USER2" is described as the bound value of the variable A and "H_2" is described as the bound value of the variable H are combined. The scenario integrating unit 144 integrates, as depicted in Fig. 24, elements having different bound variables by OR.

It is to be noted that, in Figs. 20 and 21, processing in Steps S205 to S218 is the same as that of Figs. 12 to 15 and explanations thereof will be omitted.

### *** Description of the effect of the embodiment ***

As described above, in the present embodiment, when an attack event whose monitoring is newly started by Embodiment 1 is detected, by integrating a scenario of a derivation source and a scenario about the detected attack event, it is possible to manage a series of attack activities of the attacker with one scenario.

As a result, in a detection system which determines that a cyberattack has occurred if, for example, a fixed number of attack events are detected on one scenario, activities of the attacker, which would be managed based on two or more scenarios, are combined into one scenario and managed, whereby the accuracy of detection of a cyberattack can be improved.

### Embodiment 3.

### *** Description of the configuration ***

In the present embodiment, a configuration in which a determination is made as to whether or not to permit integration of scenarios which is performed by the scenario integrating unit 144 will be described.

Hereinafter, a difference from Embodiment 1 and Embodiment 2 will be mainly described. Matters which are not described in the following description are the same as those of Embodiment 1 and Embodiment 2.

Also in the present embodiment, a system configuration example is as depicted in Fig. 1.

Moreover, also in the present embodiment, a functional configuration example of an information processing device 100 is as depicted in Fig. 2, but an internal configuration example of a scenario controlling unit 104 is different from those of Embodiment 1 and Embodiment 2.

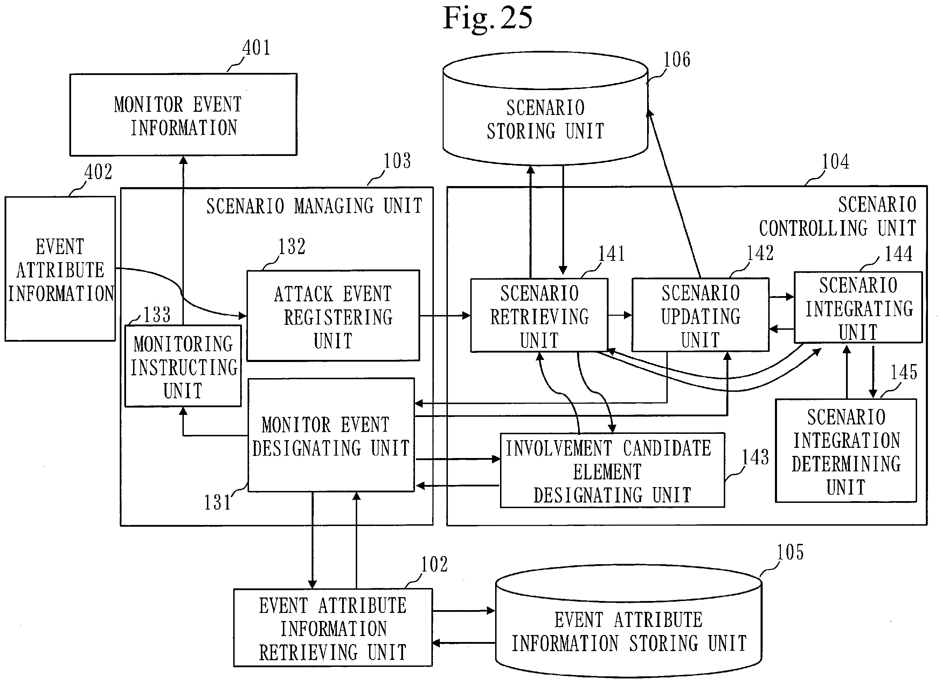

Fig. 25 depicts an example of detailed configurations of a scenario managing unit 103 and the scenario controlling unit 104 according to the present embodiment.

As depicted in Fig. 25, the scenario managing unit 103 has the same configuration as that of Embodiment 1 and Embodiment 2, and, in the scenario controlling unit 104, in addition to the configuration of Embodiment 2, a scenario integration determining unit 145 is disposed.

The scenario integration determining unit 145 determines whether or not to permit integration of a scenario of an event involvement element and a scenario of an involvement candidate element which is performed by the scenario integrating unit 144.

It is to be noted that, also in the present embodiment, as depicted in Fig. 4, the information processing device 100 is configured with hardware such as a processor 901, a storage device 902, a receiver 903, and a transmitter 904.

### *** Description of an operation ***

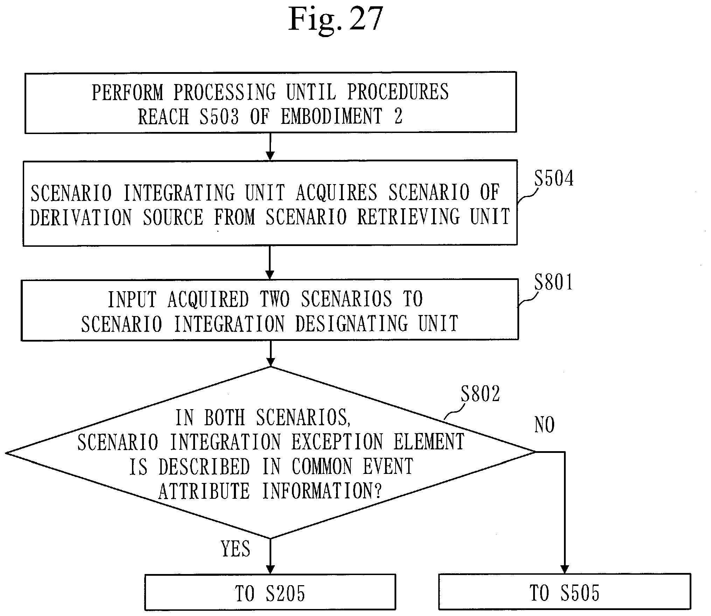

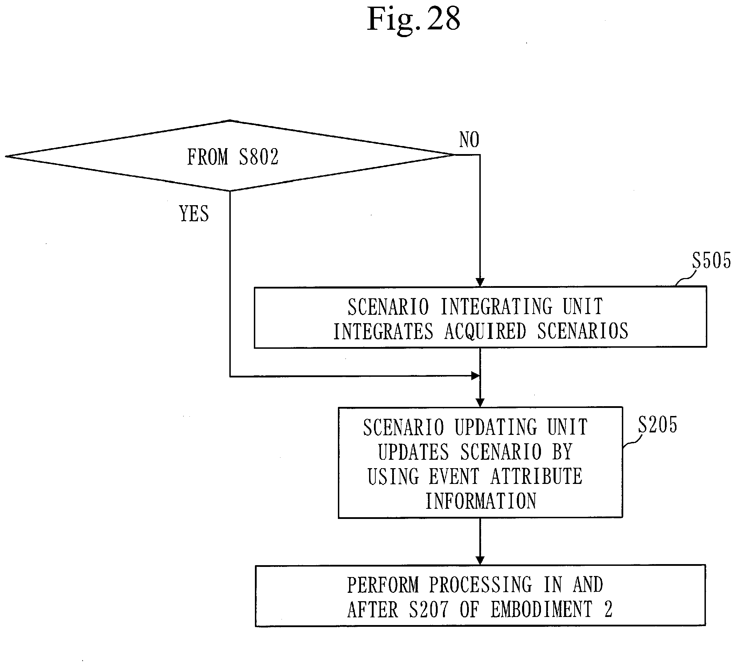

An operation example of the information processing device 100 according to Embodiment 3 will be described with reference to Figs. 27 and 28.

Figs. 27 and 28 are flowcharts depicting the flow of detailed operations of the scenario managing unit 103 and the scenario controlling unit 104 of the information processing device 100 according to Embodiment 3.

First, processing is performed until the procedures reach Step S503 in Fig. 20 and processing in S504 of Fig. 21 is then performed, and the scenario integrating unit 144 acquires a scenario of a derivation source.

Next, in Step S801, the scenario integrating unit 144 inputs the scenario acquired in S502 and the scenario acquired in S504 to the scenario integration determining unit 145.

Next, in Step S802, the scenario integration determining unit 145 checks whether or not, in both scenarios, a scenario integration exception identifier is described in common event attribute information.

If, in both scenarios, the scenario integration exception identifier is described in the common event attribute information, Step S205 is performed. That is, the scenario integration determining unit 145 does not permit integration of the scenario of the event involvement element and the scenario of the involvement candidate element, and, therefore, the scenario integrating unit 144 does not integrate the scenario of the event involvement element and the scenario of the involvement candidate element.

On the other hand, if a scenario integration exception identifier is not described in common event attribute information, S505 is performed. That is, the scenario integration determining unit 145 permits integration of the scenario of the event involvement element and the scenario of the involvement candidate element, and, therefore, the scenario integrating unit 144 integrates the scenario of the event involvement element and the scenario of the involvement candidate element.

The subsequent processing is the same as that of Embodiment 2.

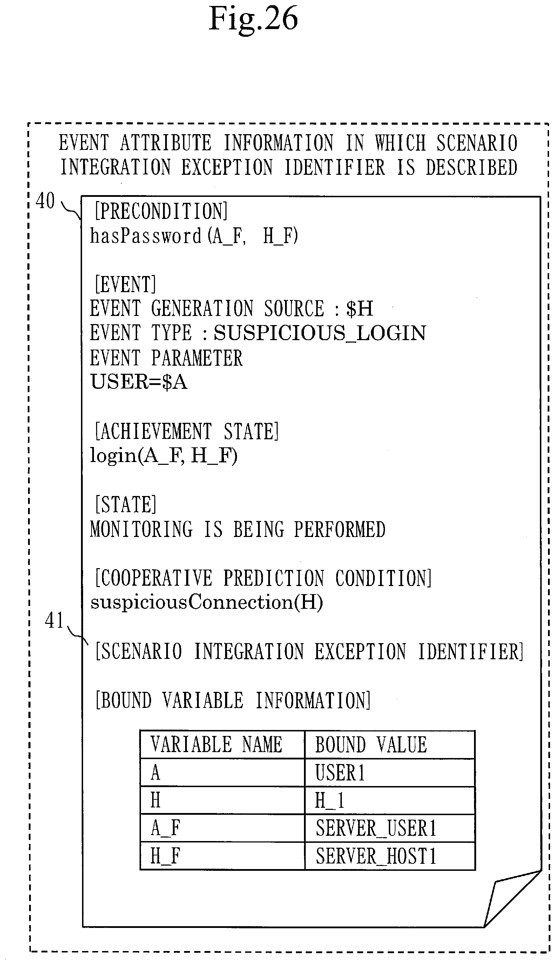

Fig. 26 depicts, an example of event attribute information in which a scenario integration exception identifier.

As depicted in Fig. 26, in event attribute information 40, as denoted by a reference sign 41, a scenario integration exception identifier is included.

As described earlier, the scenario integration determining unit 145 checks whether or not, in two scenarios, a scenario integration exception identifier is described in common event attribute information. Then, if the scenario integration exception identifier is not described in the common event attribute information, the scenario integration determining unit 145 permits integration of the scenarios; if the scenario integration exception identifier is described in the common event attribute information, the scenario integration determining unit 145 does not permit integration of the scenarios.

It is to be noted that, when checking whether or not a scenario integration exception identifier is described in common event attribute information, the scenario integration determining unit 145 compares only the event types with no consideration given to a difference in the bound variable information included in the event attribute information.

### *** Description of the effect of the embodiment ***

As described above, in the present embodiment, by not performing integration of scenarios, it is possible to monitor an attack activity based on a scenario set for each attacker if there are a plurality of attackers. As a result, it is possible to prevent damage which would be caused as a result of a plurality of attack activities being misidentified as the attack activities made by one attacker. If a plurality of attack activities are misidentified as the attack activities made by one attacker, it is impossible to detect each attack activity effectively, which causes damage to spread; in the present embodiment, it is possible to prevent such damage.

### Embodiment 4.

### *** Description of the configuration ***

In the present embodiment, a configuration in which a determination is made as to whether or not to permit addition of monitor event information of an involvement candidate element to a scenario of the involvement candidate element which is performed by the scenario updating unit 142 will be described.

Hereinafter, a difference from Embodiments 1 to 3 will be mainly described. Matters which are not described in the following description are the same as those of Embodiments 1 to 3.

Also in the present embodiment, a system configuration example is as depicted in Fig. 1.

Moreover, also in the present embodiment, a functional configuration example of an information processing device 100 is as depicted in Fig. 2, but an internal configuration example of a scenario controlling unit 104 is different from those of Embodiments 1 to 3.

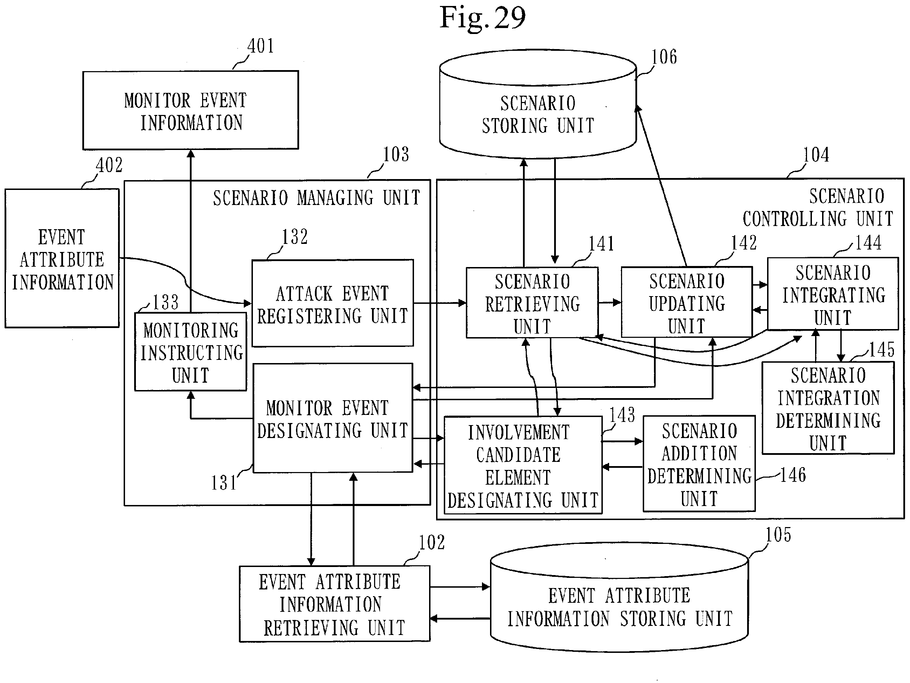

Fig. 29 depicts an example of detailed configurations of a scenario managing unit 103 and the scenario controlling unit 104 according to the present embodiment.

As depicted in Fig. 29, the scenario managing unit 103 has the same configuration as that of Embodiments 1 to 3, and, in the scenario controlling unit 104, in addition to the configuration of Embodiment 3, a scenario addition determining unit 146 is disposed.

The scenario addition determining unit 146 determines whether or not to permit addition of monitor event information of an involvement candidate element to a scenario of the involvement candidate element which is performed by the scenario updating unit 142.

It is to be noted that, also in the present embodiment, as depicted in Fig. 4, the information processing device 100 is configured with hardware such as a processor 901, a storage device 902, a receiver 903, and a transmitter 904.

### *** Description of an operation ***

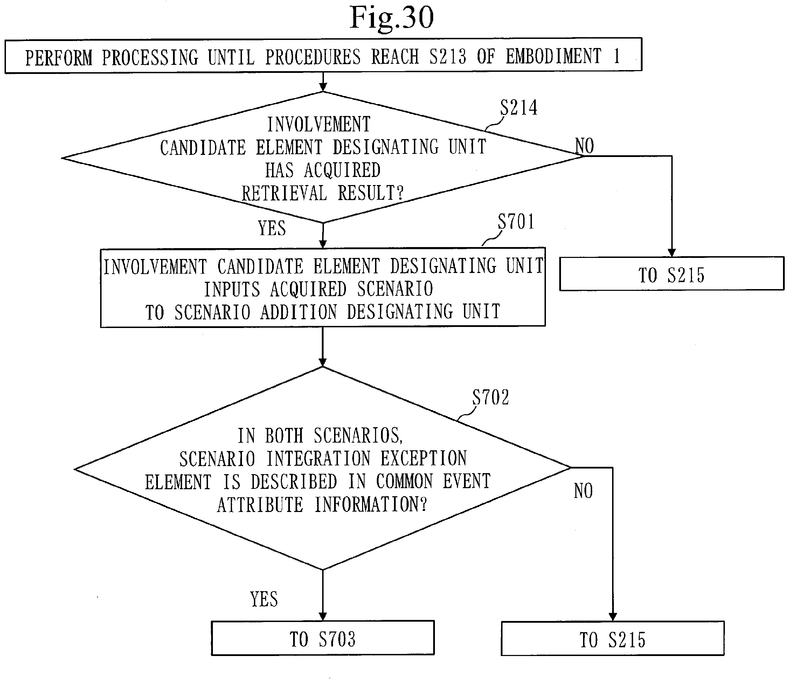

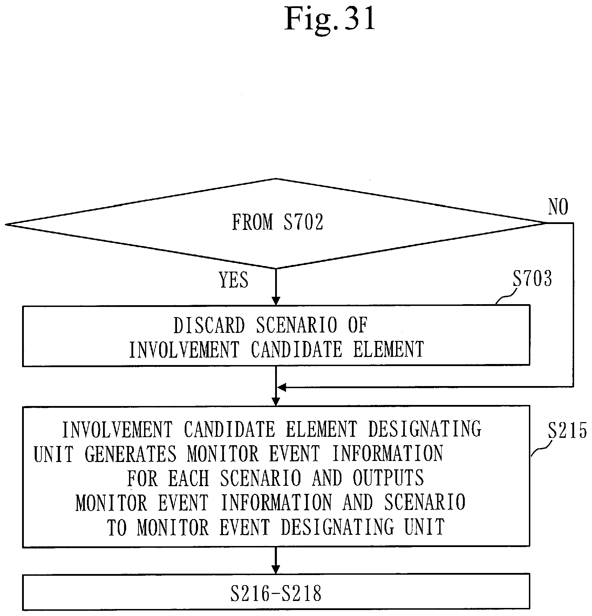

An operation example of the information processing device 100 according to Embodiment 4 will be described with reference to Figs. 30 and 31.

Figs. 30 and 31 are flowcharts depicting the flow of detailed operations of the scenario managing unit 103 and the scenario controlling unit 104 of the information processing device 100 according to Embodiment 4.

First, processing is performed until the procedures reach Step S213 in Fig. 14, and processing in Step S214 in Fig. 14 is then performed.

If the involvement candidate element designating unit 143 has acquired a scenario which is a retrieval result in Step S214, S701 is performed; if the involvement candidate element designating unit 143 does not acquire a scenario which is a retrieval result, S215 is performed.

In Step S701, the involvement candidate element designating unit 143 inputs the scenario of the event involvement element and the scenario of the involvement candidate element to the scenario addition determining unit 146.

Next, in Step S702, the scenario addition determining unit 146 checks whether or not, in both scenarios, a scenario integration exception identifier is described in common event attribute information. The scenario integration exception identifier is the same as that described in Embodiment 3.

If, in both scenarios, the scenario integration exception identifier is described in the common event attribute information, Step S703 is performed. That is, the scenario addition determining unit 146 does not permit addition of the monitor event information to the scenario of the involvement candidate element, and, therefore, the scenario updating unit 142 discards the scenario of the involvement candidate element.

On the other hand, if the scenario integration exception identifier is not described in the common event attribute information, S215 is performed. That is, the scenario addition determining unit 146 permits addition of the monitor event information to the scenario of the involvement candidate element, and, therefore, the involvement candidate element designating unit 143 generates the monitor event information for each scenario of the involvement candidate element and outputs the monitor event information and the scenario to the monitor event designating unit 131.

The subsequent processing is the same as that of Embodiment 1, and the scenario updating unit 142 updates the scenario of the involvement candidate element by adding the monitor event information of the involvement candidate element to the scenario of the involvement candidate element.

### *** Description of the effect of the embodiment ***

As described above, in the present embodiment, since a determination as to whether or not to add the monitor event information to the scenario of the involvement candidate element is made prior to the generation of the monitor event information, it is possible to reduce unnecessary generation of the monitor event information.

As a result, it is possible to reduce the computation load of the information processing device 100.

### *** Supplementary note ***

While the embodiments of the present invention have been described, two or more embodiments of these embodiments may be combined and carried out.

Alternatively, one of these embodiments may be partially carried out.

Alternatively, two or more embodiments of these embodiments may be partially combined and carried out.

It is to be noted that the present invention is not limited to these embodiments and various changes may be made thereto when necessary.

### *** Description of the hardware configuration ***

Finally, supplementary explanations of the hardware configuration of the information processing device 100 will be given.

The information processing device 100 is a computer.

The processor 901 depicted in Fig. 4 is an integrated circuit (IC) that performs processing.

The processor 901 is a central processing unit (CPU), a digital signal processor (DSP), or the like.

The storage device 902 depicted in Fig. 4 is random access memory (RAM), read only memory (ROM), flash memory, a hard disc drive (HDD), or the like.

The receiver 903 depicted in Fig. 4 receives data, and the transmitter 904 transmits data. The receiver 903 and the transmitter 904 are, for example, communication chips or network interface cards (NICs).

Moreover, in the storage device 902, an operating system (OS) is also stored.

In addition, at least part of the OS is executed by the processor 901.

The processor 901 executes programs that realize the functions of the alert receiving unit 101, the event attribute information retrieving unit 102, the scenario managing unit 103, and the scenario controlling unit 104 (hereinafter collectively referred to as a "unit") while executing at least part of the OS.

In Fig. 4, one processor is depicted, but the information processing device 100 may include a plurality of processors.

Moreover, information, data, a signal value, and a variable value indicating the result of the processing of the "unit" are stored in the storage device 902 or a register in the processor 901 or cache memory.

Furthermore, the programs that realize the functions of the "unit" may be stored in portable storage media such as a magnetic disc, a flexible disc, an optical disc, a compact disc, a Blu-ray (registered trademark) disc, and a DVD.

Moreover, the "unit" may be read as "processing circuitry", a "circuit", a "process", "procedures", or "processing".

The "processing circuitry" or the "circuit" is a concept that covers not only the processor 901, but also other types of processing circuits such as a logic IC, a gate array (GA), an application specific integrated circuit (ASIC), or a field-programmable gate array (FPGA).

It is to be noted that the configuration of Fig. 4 is a mere example of the hardware configuration of the information processing device 100, and the hardware configuration of the information processing device 100 is not limited to the configuration depicted in Fig. 4 and may be other configurations.

### Reference Signs List

100 information processing device, 101 alert receiving unit, 102 event attribute information retrieving unit, 103 scenario managing unit, 104 scenario controlling unit, 105 event attribute information storing unit, 106 scenario storing unit, 131 monitor event designating unit, 132 attack event registering unit, 133 monitoring instructing unit, 141 scenario retrieving unit, 142 scenario updating unit, 143 involvement candidate element designating unit, 144 scenario integrating unit, 145 scenario integration determining unit, 146 scenario addition determining unit, 200 information system, 300 system component element, 400 detection alert, 401 monitor event information, 402 event attribute information, 500 monitoring device, 600 network.

## Claims

1. An information processing device (100) comprising:
a monitor event designating unit (131) to designate, if an attack event which attacks an information system (200) in which a plurality of system component elements(300) are included is detected and a notification of a detected event which is the detected attack event and an event involvement element which is a system component element involved in an occurrence of the detected event is provided, an attack event which can occur next to the detected event due to involvement of the event involvement element, as a monitor event; and
an involvement candidate element designating unit (143) to designate a system component element which can be involved in an occurrence of the monitor event other than the event involvement element, as an involvement candidate element, among the plurality of system component elements,
wherein the involvement candidate element designating unit designates a system component element in which an attack event related to the monitor event has occurred, as the involvement candidate element, among the system component elements other than the event involvement element.

2. The information processing device according to claim 1, further comprising:
an event attribute information storing unit (105) to store, as for a plurality of attack events, event attribute information indicating an attribute value of an attack event, for each attack event; and
a scenario storing unit (106) to store the event attribute information of a detected attack event as a scenario by correlating the event attribute information with a system component element involved in an occurrence of the detected attack event,
wherein
the involvement candidate element designating unit acquires the event attribute information of the monitor event among a plurality of pieces of event attribute information which are stored in the event attribute information storing unit and, if an attribute value of an attack event related to the monitor event is described in the acquired event attribute information of the monitor event, and designates a system component element whose scenario includes the event attribute information in which the same attribute value as the attribute value described in the event attribute information of the monitor event is described, as the involvement candidate element, among the system component elements other than the event involvement element.

3. The information processing device according to claim 2, wherein
the event attribute information storing unit stores the event attribute information indicating, as the attribute value of the attack event, at least a state value indicating a state after an occurrence of the attack event, and
if the attribute value of the attack event related to the monitor event in addition to the state value is described in the event attribute information of the monitor event, the involvement candidate element designating unit designates, as the involvement candidate element, a system component element whose scenario includes the event attribute information in which the same state value as the attribute value described in the event attribute information of the monitor event is described, among the system component elements other than the event involvement element.

4. The information processing device according to claim 2, comprising:
a scenario updating unit (142) to add the event attribute information of the monitor event to a scenario of the event involvement element and a scenario of the involvement candidate element,
wherein
the scenario storing unit stores the scenario of the event involvement element to which the event attribute information of the monitor event is added and the scenario of the involvement candidate element to which the event attribute information of the monitor event is added.

5. The information processing device according to claim 4, further comprising:
a scenario addition determining unit (146) to determine whether or not to permit addition of the event attribute information of the monitor event to the scenario of the involvement candidate element which is performed by the scenario updating unit,
wherein
if the scenario addition determining unit permits addition of the event attribute information of the monitor event to the scenario of the involvement candidate element, the scenario updating unit adds the event attribute information of the monitor event to the scenario of the event involvement element and the scenario of the involvement candidate element, and
if the scenario addition determining unit does not permit addition of the event attribute information of the monitor event to the scenario of the involvement candidate element, the scenario updating unit adds the event attribute information of the monitor event only to the scenario of the event involvement element.

6. The information processing device according to claim 4, further comprising:
a scenario integrating unit (144) to integrate, if the scenario of the event involvement element to which the event attribute information of the monitor event is added and the scenario of the involvement candidate element to which the event attribute information of the monitor event is added are stored in the scenario storing unit, a notification of the monitor event as a newly detected attack event is provided, and a notification of the involvement candidate element as a system component element involved in an occurrence of the monitor event is provided, the scenario of the event involvement element and the scenario of the involvement candidate element, which are stored in the scenario storing unit.

7. The information processing device according to claim 6, further comprising:
a scenario integration determining unit (145) to determine whether or not to permit integration of the scenario of the event involvement element and the scenario of the involvement candidate element which is performed by the scenario integrating unit,
wherein
if the scenario integration determining unit permits integration of the scenario of the event involvement element and the scenario of the involvement candidate element, the scenario integrating unit integrates the scenario of the event involvement element and the scenario of the involvement candidate element, and
if the scenario integration determining unit does not permit integration of the scenario of the event involvement element and the scenario of the involvement candidate element, the scenario integrating unit does not integrate the scenario of the event involvement element and the scenario of the involvement candidate element.

8. The information processing device according to claim 1, further comprising:
a monitoring instructing unit (133) to instruct a monitoring device (500) which monitors the information system, to monitor the monitor event in the event involvement element and monitor the monitor event in the involvement candidate element.

9. An information processing method comprising:
designating by a computer, if an attack event which attacks an information system in which a plurality of system component elements are included is detected and a notification of a detected event which is the detected attack event and an event involvement element which is a system component element involved in an occurrence of the detected event is provided, an attack event which can occur next to the detected event due to involvement of the event involvement element, as a monitor event;
designating by the computer, a system component element which can be involved in an occurrence of the monitor event other than the event involvement element, as an involvement candidate element, among the plurality of system component elements,
wherein designating a system component element further comprises designating a system component element in which an attack event related to the monitor event has occurred, as the involvement candidate element, among the system component elements other than the event involvement element.

10. An information processing program that causes a computer to execute:
monitor event designation processing to designate, if an attack event which attacks an information system in which a plurality of system component elements are included is detected and a notification of a detected event which is the detected attack event and an event involvement element which is a system component element involved in an occurrence of the detected event is provided, an attack event which can occur next to the detected event due to involvement of the event involvement element, as a monitor event;
involvement candidate element designation processing to designate a system component element which can be involved in an occurrence of the monitor event other than the event involvement element, as an involvement candidate element, among the plurality of system component elements,
wherein designating a system component element further comprises designating a system component element in which an attack event related to the monitor event has occurred, as the involvement candidate element, among the system component elements other than the event involvement element.

## Patentansprüche

1. Informationsverarbeitungsvorrichtung (100), umfassend:
eine Überwachungsereignisbestimmungseinheit (131), um dann, wenn ein Angriffsereignis, das ein Informationssystem (200) angreift, detektiert wird, in dem eine Vielzahl von Systemkomponentenelementen (300) beinhaltet ist, und eine Benachrichtigung über ein detektiertes Ereignis, welches das detektierte Angriffsereignis ist, und ein Ereigniseinbeziehungselement, das ein Systemkomponentenelement ist, das bei einem Auftreten des detektierten Ereignisses involviert ist, bereitgestellt wird, ein Angriffsereignis zu bestimmen, das aufgrund einer Miteinbeziehung des Ereigniseinbeziehungselements neben dem detektierten Ereignis als ein Überwachungsereignis auftreten kann; und
eine Einbeziehungskandidatenelementbestimmungseinheit (143), um ein Systemkomponentenelement, das bei einem Auftreten des Überwachungsereignisses involviert sein kann, das sich von dem Ereigniseinbeziehungselement unterscheidet, als ein Einbeziehungskandidatenelement aus der Vielzahl von Systemkomponentenelementen zu bestimmen,
wobei die Einbeziehungskandidatenelementbestimmungseinheit ein Systemkomponentenelement, in dem ein auf das Überwachungsereignis bezogenes Angriffsereignis aufgetreten ist, als das Einbeziehungskandidatenelement aus den Systemkomponentenelementen, die sich von dem Ereigniseinbeziehungselement unterscheiden, bestimmt.

2. Informationsverarbeitungsvorrichtung gemäß Anspruch 1, ferner umfassend:
eine Ereignisattributinformationsspeichereinheit (105), um, wie für eine Vielzahl von Angriffsereignissen, Ereignisattributinformationen zu speichern, die einen Attributwert eines Angriffsereignisses für jedes Angriffsereignis anzeigen; und
eine Szenario-Speichereinheit (106) zum Speichern der Ereignisattributinformationen eines detektierten Angriffsereignisses als ein Szenario durch Korrelieren der Ereignisattributinformationen mit einem bei einem Auftreten des detektierten Angriffsereignisses involvierten Systemkomponentenelement,
wobei die Einbeziehungskandidatenelementbestimmungseinheit die Ereignisattributinformationen des Überwachungsereignisses aus einer Vielzahl von Teilen von Ereignisattributinformationen erfasst, die in der Ereignisattributinformationsspeichereinheit gespeichert sind, und dann, wenn ein Attributwert eines auf das Überwachungsereignis bezogenen Angriffsereignisses in den erfassten Ereignisattributinformationen des Überwachungsereignisses beschrieben wird, ein Systemkomponentenelement, dessen Szenario die Ereignisattributinformationen umfasst, in denen derselbe Attributwert als der in den Ereignisattributinformationen des Überwachungsereignisses beschriebene Attributwert beschrieben wird, als das Einbeziehungskandidatenelement bestimmt, und zwar aus den Systemkomponentenelementen, die sich von dem Ereigniseinbeziehungselement unterscheiden.

3. Informationsverarbeitungsvorrichtung gemäß Anspruch 2,
wobei die Ereignisattributinformationsspeichereinheit die Ereignisattributinformationen speichert, die als den Attributwert des Angriffsereignisses zumindest einen Zustandswert anzeigen, der einen Zustand nach einem Auftreten des Angriffsereignisses anzeigt, und
wobei dann, wenn der Attributwert des Angriffsereignisses bezogen auf das Überwachungsereignis zusätzlich zum Zustandswert in den Ereignisattributinformationen des Überwachungsereignisses beschrieben wird, die Einbeziehungskandidatenelementbestimmungseinheit als das Einbeziehungskandidatenelement ein Systemkomponentenelement bestimmt, dessen Szenario die Ereignisattributinformationen umfasst, in denen derselbe Zustandswert als der in den Ereignisattributinformationen des Überwachungsereignisses beschriebene Attributwert beschrieben wird, und zwar aus den Systemkomponentenelementen, die sich von dem Ereigniseinbeziehungselement unterscheiden.

4. Informationsverarbeitungsvorrichtung gemäß Anspruch 2, umfassend:
eine Szenario-Aktualisierungseinheit (142), um die Ereignisattributinformationen des Überwachungsereignisses zu einem Szenario des Ereigniseinbeziehungselements und einem Szenario des Einbeziehungskandidatenelements hinzuzufügen,
wobei die Szenario-Speichereinheit das Szenario des Ereigniseinbeziehungselements, zu dem die Ereignisattributinformationen des Überwachungsereignisses hinzugefügt werden, und das Szenario des Einbeziehungskandidatenelements, zu dem die Ereignisattributinformationen des Überwachungsereignisses hinzugefügt werden, speichert.

5. Informationsverarbeitungsvorrichtung gemäß Anspruch 4, umfassend:
eine Szenario-Hinzufügebestimmungseinheit (146), um zu bestimmen, ob ein Hinzufügen der Ereignisattributinformationen des Überwachungsereignisses zum Szenario des Einbeziehungskandidatenelements, das durch die Szenario-Aktualisierungseinheit ausgeführt wird, zu ermöglichen ist,
wobei dann, wenn die Szenario-Hinzufügebestimmungseinheit ein Hinzufügen der Ereignisattributinformationen des Überwachungsereignisses zu dem Szenario des Einbeziehungskandidatenelements ermöglicht, die Szenario-Aktualisierungseinheit die Ereignisattributinformationen des Überwachungsereignisses zu dem Szenario des Ereigniseinbeziehungselements und dem Szenario des Einbeziehungskandidatenelements hinzufügt, und
wobei dann, wenn die Szenario-Hinzufügebestimmungseinheit ein Hinzufügen der Ereignisattributinformationen des Überwachungsereignisses zu dem Szenario des Einbeziehungskandidatenelements nicht ermöglicht, die Szenario-Aktualisierungseinheit die Ereignisattributinformationen des Überwachungsereignisses lediglich zum Szenario des Ereigniseinbeziehungselements hinzufügt.

6. Informationsverarbeitungsvorrichtung gemäß Anspruch 4, ferner umfassend:
eine Szenario-Integriereinheit (144), um dann, wenn das Szenario des Ereigniseinbeziehungselements, zu dem die Ereignisattributinformationen des Überwachungsereignisses hinzugefügt werden, und das Szenario des Einbeziehungskandidatenelements, zu dem die Ereignisattributinformationen des Überwachungsereignisses hinzugefügt werden, in der Szenario-Speichereinheit gespeichert sind, wobei eine Benachrichtigung über das Überwachungsereignisses als ein neu detektiertes Angriffsereignis bereitgestellt wird, und eine Benachrichtigung über das Einbeziehungskandidatenelement als ein bei Auftreten des Überwachungsereignisses involviertes Systemkomponentenelement bereitgestellt wird, das Szenario des Ereigniseinbeziehungselements und das Szenario des Einbeziehungskandidatenelements, die in der Szenario-Speichereinheit gespeichert sind, zu integrieren.

7. Informationsverarbeitungsvorrichtung gemäß Anspruch 6, ferner umfassend:
eine Szenario-Integrierbestimmungseinheit (145), um zu bestimmen, ob ein Integrieren des Szenarios des Ereigniseinbeziehungselements und des Szenarios des Einbeziehungskandidatenelements, das durch die Szenario-Integriereinheit ausgeführt wird, zu ermöglichen ist,
wobei dann, wenn die Szenario-Integrierbestimmungseinheit das Integrieren des Szenarios des Ereigniseinbeziehungselements und des Szenarios des Einbeziehungskandidatenelements ermöglicht, die Szenario-Integriereinheit das Szenario des Ereigniseinbeziehungselements und das Szenario des Einbeziehungskandidatenelements integriert, und
wobei dann, wenn die Szenario-Integrierbestimmungseinheit das Integrieren des Szenarios des Ereigniseinbeziehungselements und des Szenarios des Einbeziehungskandidatenelements nicht ermöglicht, die Szenario-Integriereinheit das Szenario des Ereigniseinbeziehungselements und das Szenario des Einbeziehungskandidatenelements nicht integriert.

8. Informationsverarbeitungsvorrichtung gemäß Anspruch 1, ferner umfassend:
eine Überwachungsinstruktionseinheit (133), um eine Überwachungsvorrichtung (500), die das Informationssystem überwacht, dahingehend zu instruieren, das Überwachungsereignis in dem Ereigniseinbeziehungselement zu überwachen, und das Überwachungsereignis in dem Einbeziehungskandidatenelement zu überwachen.

9. Informationsverarbeitungsverfahren, umfassend:
Bestimmen, wenn ein Angriffsereignis, das ein Informationssystem, in dem eine Vielzahl von Systemkomponentenelementen enthalten sind, angreift, detektiert wird, und eine Benachrichtigung über ein detektiertes Ereignis, welches das detektierte Angriffsereignis ist, und ein Ereigniseinbeziehungselement, das ein Systemkomponentenelement ist, das bei einem Auftreten des detektierten Ereignisses involviert ist, bereitgestellt wird, eines Angriffsereignisses durch einen Computer, das aufgrund einer Miteinbeziehung des Ereigniseinbeziehungselements neben dem detektierten Ereignis als ein Überwachungsereignis auftreten kann;
Bestimmen eines Systemkomponentenelements durch den Computer, das bei einem Auftreten des Überwachungsereignisses, das sich von dem Ereigniseinbeziehungselement unterscheidet, involviert sein kann, als ein Einbeziehungskandidatenelement, und zwar aus der Vielzahl von Systemkomponentenelementen,
wobei das Bestimmen eines Systemkomponentenelements ferner das Bestimmen eines Systemkomponentenelements, in dem ein auf das Überwachungsereignis bezogenes Angriffsereignis aufgetreten ist, als das Einbeziehungskandidatenelement umfasst, und zwar aus den Systemkomponentenelementen, die sich von dem Ereigniseinbeziehungselement unterscheiden.

10. Informationsverarbeitungsprogramm,
das einen Computer veranlasst, Folgendes auszuführen:
Überwachungsereignisbestimmungsverarbeitung zum Bestimmen eines Angriffsereignisses, das neben dem detektierten Ereignis aufgrund einer Miteinbeziehung des Ereigniseinbeziehungselements als ein Überwachungsereignis auftreten kann, und zwar wenn ein Angriffsereignis, welches das Informationssystem, in dem eine Vielzahl von Systemkomponentenelementen enthalten sind, angreift, detektiert wird, und eine Benachrichtigung über ein detektiertes Ereignis, welches das detektierte Angriffsereignis ist, und ein Ereigniseinbeziehungselement, das ein in einem Auftreten des detektierten Ereignisses involviertes Systemkomponentenelement ist, bereitgestellt wird;
Einbeziehungskandidatenelementbestimmungsverarbeitung zum Bestimmen eines sich von dem Ereigniseinbeziehungselement unterscheidenden Systemkomponentenelements, das bei einem Auftreten des Überwachungsereignisses als ein Einbeziehungskandidatenelement aus der Vielzahl von Systemkomponentenelementen involviert sein kann,
wobei das Bestimmen eines Systemkomponentenelements ferner das Bestimmen eines Systemkomponentenelements, in dem ein auf das Überwachungsereignis bezogenes Angriffsereignis aufgetreten ist, als das Einbeziehungskandidatenelement umfasst, und zwar aus den Systemkomponentenelementen, die sich von dem Ereigniseinbeziehungselement unterscheiden.

## Revendications

1. Dispositif de traitement d'informations (100) comprenant :
une unité de désignation d'événement de moniteur (131) destinée à désigner, si un événement d'attaque est détecté, lequel attaque un système d'information (200) dans lequel est incluse une pluralité d'éléments de composant de système (300), et si une notification d'un événement détecté qui correspond à l'événement d'attaque détecté et un élément d'implication d'événement qui correspond à un élément de composant de système impliqué dans une occurrence de l'événement détecté sont fournis, un événement d'attaque qui peut survenir à proximité de l'événement détecté sous l'effet de l'implication de l'événement détecté, en tant qu'un événement de moniteur ; et
une unité de désignation d'élément candidat d'implication (143) destinée à désigner un élément de composant de système qui peut être impliqué dans une occurrence de l'événement de moniteur, distinct de l'élément d'implication d'événement, en tant qu'un élément candidat d'implication, parmi la pluralité d'éléments de composant de système ;
dans lequel l'unité de désignation d'élément candidat d'implication désigne un élément de composant de système dans lequel un événement d'attaque connexe à l'événement de moniteur s'est produit, en tant que l'élément candidat d'implication, parmi les éléments de composant de système distincts de l'élément d'implication d'événement.

2. Dispositif de traitement d'informations selon la revendication 1, comprenant en outre :
une unité de stockage d'informations d'attribut d'événement (105) destinée à stocker, pour une pluralité d'événements d'attaque, des informations d'attribut d'événement indiquant une valeur d'attribut d'un événement d'attaque, pour chaque événement d'attaque ; et
une unité de stockage de scénarios (106) destinée à stocker les informations d'attribut d'événement d'un événement d'attaque détecté, sous la forme d'un scénario, en corrélant les informations d'attribut d'événement avec un élément de composant de système impliqué dans une occurrence de l'événement d'attaque détecté ;
dans lequel :
l'unité de désignation d'élément candidat d'implication acquiert les informations d'attribut d'événement de l'événement de moniteur parmi une pluralité d'éléments d'informations d'attribut d'événement qui sont stockés dans l'unité de stockage d'informations d'attribut d'événement et, si une valeur d'attribut d'un événement d'attaque connexe à l'événement de moniteur est décrite dans les informations d'attribut d'événement acquises de l'événement de moniteur, et désigne un élément de composant de système, dont le scénario inclut les informations d'attribut d'événement dans lesquelles est décrite la même valeur d'attribut que la valeur d'attribut décrite dans les informations d'attribut d'événement de l'événement de moniteur, en tant que l'élément candidat d'implication, parmi les éléments de composant de système distincts de l'élément d'implication d'événement.

3. Dispositif de traitement d'informations selon la revendication 2, dans lequel :
l'unité de stockage d'informations d'attribut d'événement stocke les informations d'attribut d'événement en indiquant, en tant que la valeur d'attribut de l'événement d'attaque, au moins une valeur d'état indiquant un état après une occurrence de l'événement d'attaque ; et
si la valeur d'attribut de l'événement d'attaque connexe à l'événement de moniteur, outre la valeur d'état, est décrite dans les informations d'attribut d'événement de l'événement de moniteur, l'unité de désignation d'élément candidat d'implication désigne, en tant que l'élément candidat d'implication, un élément de composant de système dont le scénario inclut les informations d'attribut d'événement dans lesquelles est décrite la même valeur d'état que la valeur d'attribut décrite dans les informations d'attribut d'événement de l'événement de moniteur, parmi les éléments de composant de système distincts de l'élément d'implication d'événement.

4. Dispositif de traitement d'informations selon la revendication 2, comprenant :
une unité de mise à jour de scénario (142) destinée à ajouter les informations d'attribut d'événement de l'événement de moniteur à un scénario de l'élément d'implication d'événement et à un scénario de l'élément candidat d'implication ;
dans lequel :
l'unité de stockage de scénarios stocke le scénario de l'élément d'implication d'événement auquel les informations d'attribut d'événement de l'événement de moniteur sont ajoutées, et le scénario de l'élément candidat d'implication auquel les informations d'attribut d'événement de l'événement de moniteur sont ajoutées.

5. Dispositif de traitement d'informations selon la revendication 4, comprenant en outre :
une unité de détermination d'ajout de scénario (146) destinée à déterminer s'il convient d'autoriser ou non l'ajout des informations d'attribut d'événement de l'événement de moniteur au scénario de l'élément candidat d'implication qui est mis en oeuvre par l'unité de mise à jour de scénario ;
dans lequel :
si l'unité de détermination d'ajout de scénario autorise l'ajout des informations d'attribut d'événement de l'événement de moniteur au scénario de l'élément candidat d'implication, l'unité de mise à jour de scénario ajoute les informations d'attribut d'événement de l'événement de moniteur au scénario de l'élément d'implication d'événement et au scénario de l'élément candidat d'implication ; et
si l'unité de détermination d'ajout de scénario n'autorise pas l'ajout des informations d'attribut d'événement de l'événement de moniteur au scénario de l'élément candidat d'implication, l'unité de mise à jour de scénario ajoute les informations d'attribut d'événement de l'événement de moniteur uniquement au scénario de l'élément d'implication d'événement.

6. Dispositif de traitement d'informations selon la revendication 4, comprenant en outre :
une unité d'intégration de scénario (144) destinée à intégrer, si le scénario de l'élément d'implication d'événement auquel sont ajoutées les informations d'attribut d'événement de l'événement de moniteur, et le scénario de l'élément candidat d'implication auquel sont ajoutées les informations d'attribut d'événement de l'événement de moniteur, sont stockés dans l'unité de stockage de scénarios, une notification de l'événement de moniteur, en tant qu'un événement d'attaque nouvellement détecté, est fournie, et une notification de l'élément candidat d'implication, en tant qu'un élément de composant de système impliqué dans une occurrence de l'événement de moniteur, est fournie, le scénario de l'élément d'implication d'événement et le scénario de l'élément candidat d'implication, lesquels sont stockés dans l'unité de stockage de scénarios.

7. Dispositif de traitement d'informations selon la revendication 6, comprenant en outre :
une unité de détermination d'intégration de scénario (145) destinée à déterminer s'il convient ou non de permettre l'intégration du scénario de l'élément d'implication d'événement et du scénario de l'élément candidat d'implication qui est mise en oeuvre par l'unité d'intégration de scénario ;
dans lequel :
si l'unité de détermination d'intégration de scénario permet l'intégration du scénario de l'élément d'implication d'événement et du scénario de l'élément candidat d'implication, l'unité d'intégration de scénario intègre le scénario de l'élément d'implication d'événement et le scénario de l'élément candidat d'implication ; et
si l'unité de détermination d'intégration de scénario ne permet pas l'intégration du scénario de l'élément d'implication d'événement et du scénario de l'élément candidat d'implication, l'unité d'intégration de scénario n'intègre pas le scénario de l'élément d'implication d'événement et le scénario de l'élément candidat d'implication.

8. Dispositif de traitement d'informations selon la revendication 1, comprenant en outre :
une unité d'instruction de surveillance (133) destinée à donner instruction, à un dispositif de surveillance (500) qui surveille le système d'information, de surveiller l'événement de moniteur dans l'élément d'implication d'événement, et de surveiller l'événement de moniteur dans l'élément candidat d'implication.

9. Procédé de traitement d'informations comprenant les étapes ci-dessous consistant à :
désigner, par le biais d'un ordinateur, si un événement d'attaque est détecté, lequel attaque un système d'information dans lequel est incluse une pluralité d'éléments de composant de système, et si une notification d'un événement détecté qui correspond à l'événement d'attaque détecté et un élément d'implication d'événement qui correspond à un élément de composant de système impliqué dans une occurrence de l'événement détecté sont fournis, un événement d'attaque qui peut survenir à proximité de l'événement détecté sous l'effet de l'implication de l'événement détecté, en tant qu'un événement de moniteur ; et
désigner, par le biais d'un ordinateur, un élément de composant de système qui peut être impliqué dans une occurrence de l'événement de moniteur, distinct de l'élément d'implication d'événement, en tant qu'un élément candidat d'implication, parmi la pluralité d'éléments de composant de système ;
dans lequel l'étape de désignation d'un élément de composant de système consiste en outre à désigner un élément de composant de système dans lequel un événement d'attaque connexe à l'événement de moniteur s'est produit, en tant que l'élément candidat d'implication, parmi les éléments de composant de système distincts de l'élément d'implication d'événement.

10. Programme de traitement d'informations qui amène un ordinateur à exécuter :
un traitement de désignation d'événement de moniteur visant à désigner, si un événement d'attaque est détecté, lequel attaque un système d'information dans lequel est incluse une pluralité d'éléments de composant de système, et si une notification d'un événement détecté qui correspond à l'événement d'attaque détecté et un élément d'implication d'événement qui correspond à un élément de composant de système impliqué dans une occurrence de l'événement détecté sont fournis, un événement d'attaque qui peut survenir à proximité de l'événement détecté sous l'effet de l'implication de l'événement détecté, en tant qu'un événement de moniteur ;
un traitement de désignation d'élément candidat d'implication visant à désigner un élément de composant de système qui peut être impliqué dans une occurrence de l'événement de moniteur, distinct de l'élément d'implication d'événement, en tant qu'un élément candidat d'implication, parmi la pluralité d'éléments de composant de système ;
dans lequel l'étape de désignation d'un élément de composant de système consiste en outre à désigner un élément de composant de système dans lequel un événement d'attaque connexe à l'événement de moniteur s'est produit, en tant que l'élément candidat d'implication, parmi les éléments de composant de système distincts de l'élément d'implication d'événement.
